# EUROPEAN PATENT SPECIFICATION

(11) **EP 1 335 233 B1**
(45) Date of publication and mention of the grant of the patent: **15.12.2004**
(21) Application number: 03250570.3
(22) Date of filing: 30.01.2003
(51) Int. Cl.: G02B 26/08

(54) **Control apparatus and control method of optical signal exchanger**
Kontrollapparat und -methode eines optischen Signalschalters
Appareil et méthode de contrôle d'un commutateur optique

(30) Priority: 08.02.2002 JP 2002132833
(43) Date of publication of application: 13.08.2003
(73) Proprietor: FUJITSU LIMITED, Kawasaki-shi, Kanagawa 211-8588 (JP)
(72) Inventor: Tochio, Yuji, Fujitsu Limited, Kawasaki-shi, Kanagawa 211-8588 (JP); Mori, Kazuyuki, Fujitsu Limited, Kawasaki-shi, Kanagawa 211-8588 (JP)
(74) Representative: Williams, Michael Ian

(56) References cited:
- EP-B- 0 565 276
- WO-A-01/95009
- WO-A-01/95013
- US-A- 6 137 941
- US-B1- 6 263 123
- US-B1- 6 337 760

## Description

The present invention relates to a switching control technique for an optical signal exchanger, and in particular relates to a control apparatus and a control method of an optical signal exchanger that uses a reflecting tilt mirror made by micromachining (MEMS: Micro Electric Mechanical System) technology.

Recently, with the increase in traffic on the Internet and the like, a demand for optical networks is increasing. Under such circumstances, attention is being paid to the introduction of optical signal exchangers that switch data of high speed and high volume just as in an optical signal state. As a conventional technique for realizing a high speed and high capacity optical signal exchanger, for example a system mechanically switching an optical fiber or a system constituted by combining waveguides, has been predominant. However, in this conventional technique, it is necessary to adopt a multistage constitution. Therefore, an optical loss inside the optical signal exchanger is very significant, and further, there is also a limit to deal with an increase in the number of channels. Consequently, it is difficult to realize an optical signal exchanger that deals with several 10 channels or more.

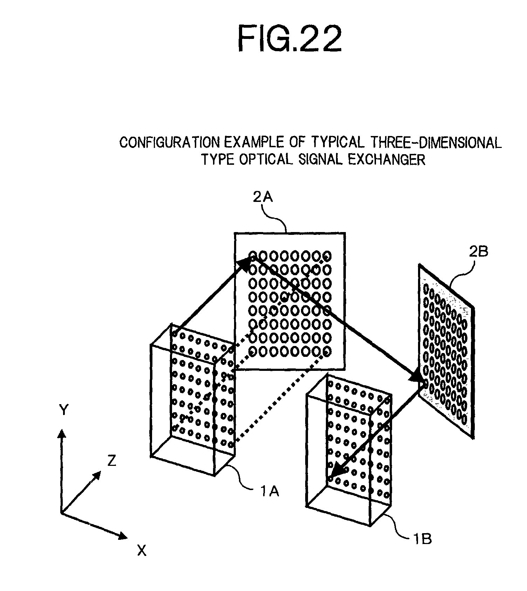

Under the abovementioned circumstances, an optical switch using a tilt mirror (hereunder referred to as an MEMS mirror) made by applying micromachining (MEMS) technology is predominant compared to other switches, from the point of miniaturization, wavelength independence and polarization independence, and is thus gaining attention. In particular, for example as shown in FIG. 22, an optical signal exchanger of three-dimensional type constituted by combining two collimator arrays 1A and 1B having a plurality of collimators arranged in two dimensions, respectively, and two MEMS mirror arrays 2A and 2B having a plurality of MEMS mirrors arranged in two dimensions, respectively, is expected from the point that a reduction in optical loss, a large capacity and multichannel can be realized. WO 01095013 discloses a method of switching optical beams between an array of input positions and an array of output positions by selectively changing the angles of movable reflectors. Moreover the optical output power is monitored and a feed-back signal is generated which is used to adjust the angle of the relevant output mirror accordingly.

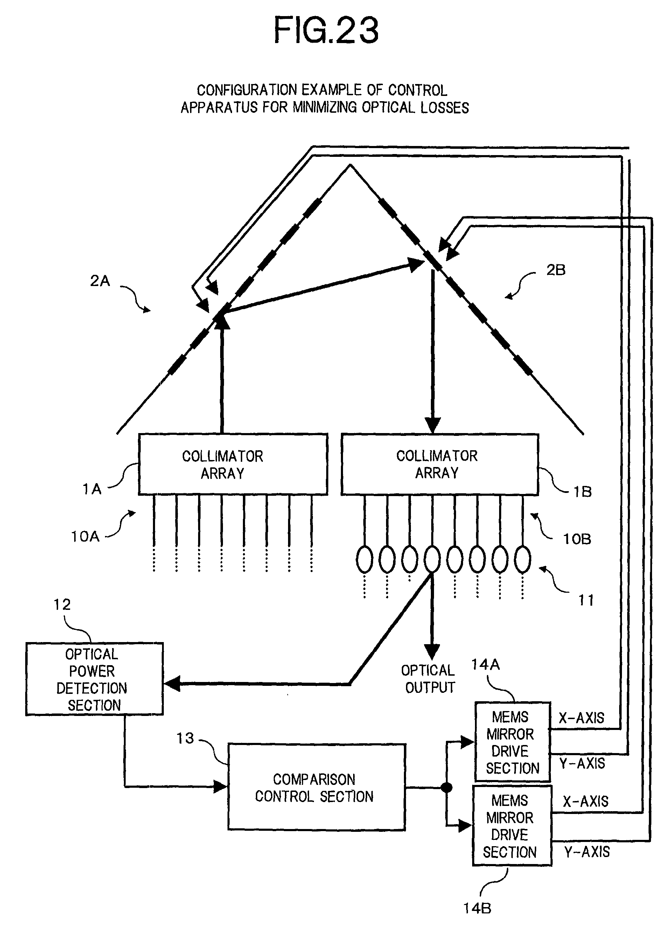

Regarding the abovementioned three-dimensional optical signal exchanger, the present applicant has proposed a control technique for automatically correcting angular displacement of respective MEMS mirrors to reduce an optical loss (Japanese Unexamined Patent Publication No. 2002-236264). A control apparatus for an optical signal exchanger applied with this control technique, for example as shown in FIG. 23, automatically corrects the angular displacement of reflecting surfaces of respective MEMS mirrors by; detecting in an optical power detection section 12, power of light branched by an optical coupler array 11 provided on a latter stage of an output optical fiber array 10B connected to a collimator 1B on an output side, judges in a comparison control section 13 based on the detection results, coupling states of optical signals with respect to output optical fibers, and controlling respective MEMS mirror drive sections 14A and 14B so that the loss inside the optical signal exchanger become minimum.

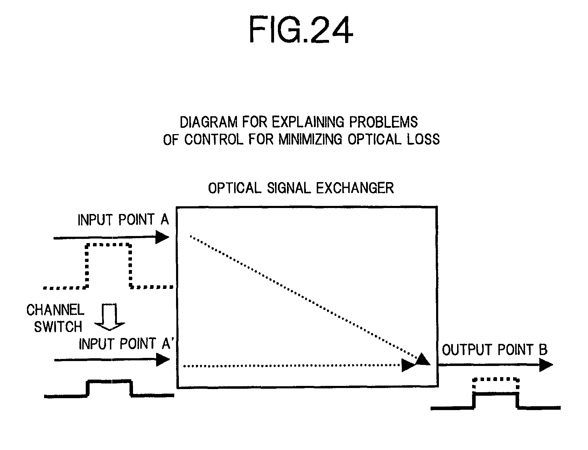

However, in this control technique for minimizing the loss inside the optical signal exchanger, when performing the channel switching so that for example an optical path transmitting an optical signal from an input point A to an output point B, is changed to an optical path transmitting an optical signal from an input point A' to an output point B, then as shown in a conceptual diagram of FIG. 24, if an optical input level to the input point A is different from that to the input point A', a level of the optical signal to be output to an identical output point B, is changed before and after the switching. There is a possibility that such a change in the optical output level accompanying the channel switching influences on a system connected to a latter part of the optical signal exchanger. More specifically, this is likely to cause saturation of an optical amplifier or an increase in a bit error rate, or the like.

It is desirable to provide a control apparatus and a control method of an optical signal exchanger, capable of controlling an optical output level to be constant even when performing the switching of channels with different optical input levels.

According to an aspect of the present invention, there is provided a control apparatus of an optical signal exchanger which includes a first mirror array and a second mirror array, each having a plurality of tilt mirrors arranged on a plane, each tilt mirror having a reflecting surface an angle of which is controllable, and which sequentially reflects an input optical signal by the first and second mirror arrays to output from a specific position, for controlling the angle of the reflecting surface of each of the tilt mirrors of the first and second mirror arrays, comprising: an optical power detection unit that detects power of the optical signal output from the specific position; and an angle control unit that controls the angle of at least one of the reflecting surfaces of the tilt mirrors of the first and second mirror arrays, which have reflected the optical signal, so that the optical power detected by the optical power detection unit becomes constant at a target value set corresponding to the specific position.

With such a constitution, the power of the optical signal sequentially reflected by the first and second mirror arrays to be output from the specific position is detected by the optical power detection unit, and the angle of the reflecting surface of one or both of the tilt mirrors positioned on a propagation path of the optical signal is controlled by the angle control unit so that the output light power becomes constant at a previously set target value. As a result, even when the switching is performed on channels with different optical input levels, the optical output level can be controlled to be constant regardless of a change in the optical input level.

Moreover, as a specific constitution for the abovementioned control apparatus, the angle control unit may comprise: a first mirror drive section that changes stepwise the angle of the reflecting surface of each tilt mirror of the first mirror array in a constant control direction; a second mirror drive section that changes stepwise the angle of the reflecting surface of each tilt mirror of the second mirror array in a constant control direction; and a comparison control section that calculates absolute values of differences between the target value and respective values of the output light power that are detected by the optical power detection unit immediately before and after the angle of the reflecting surface is changed by at least one of the first mirror drive section and the second mirror drive section to compare the absolute values with each other, and determines respective control directions in the first mirror drive section and the second mirror drive section based on the comparison result, to feedback control the angle of the reflecting surface so that the absolute values of the differences become minimum. With such a constitution, the angles of the reflecting surfaces of the respective tilt mirrors are feedback controlled based on the absolute value of the difference between the value of the output light power detected by the optical power detection unit and the target value.

Further, as a preferred aspect of the abovementioned control apparatus, the comparison control section may, for respective axes of the reflecting surfaces of the respective tilt mirrors of the first and second mirror arrays, in an initial state before feedback controlling the angles of the reflecting surfaces, investigate to determine the control directions where the value of the output light power detected by the optical power detection unit approximates to the target value, and sequentially switch the feedback control for each axis in accordance with each of the determined control directions. According to such a constitution, after the directions in which the respective axes are to be controlled are preliminarily investigated and determined, the angles of the reflecting surfaces are feedback controlled in accordance with the control directions.

As another preferred aspect of the abovementioned control apparatus, the comparison control section may, for respective axes of the reflecting surfaces of the respective tilt mirrors of the first and second mirror arrays, in an initial state before feedback controlling the angles of the reflecting surfaces, initially set the angles of the reflecting surfaces so that the optical loss with respect to the optical signal output from the specific position becomes minimum, and then feedback control in accordance with an arbitrary control direction with respect to at least one axis of the plurality of axes. According to such a constitution, it becomes unnecessary to perform the above described investigation of the control directions for the respective axes, and hence a control time can be shortened.

The present invention further provides a control method of an optical signal exchanger which includes a first mirror array and a second mirror array, each having a plurality of tilt mirrors arranged on a plane, each tilt mirror having a reflecting surface an angle of which is controllable, and which sequentially reflects an input optical signal by the first and second mirror arrays to output from a specific position, for controlling the angle of the reflecting surface of each of the tilt mirrors of the first and second mirror arrays, comprising the processes of: detecting power of the optical signal output from the specific position; and controlling the angle of at least one of the reflecting surfaces of the tilt mirrors of the first and second mirror arrays, which have reflected the optical signal, so that the optical power detected becomes constant at a target value set corresponding to the specific position.

Other objects, characteristics and advantages of the present invention will become apparent from the following description of embodiments, in conjunction with the appended drawings, in which:
FIG. 1 is a functional block diagram showing a constitution of a control apparatus of an optical signal exchanger according to a first embodiment of the present invention.
FIG.2 is a schematic diagram showing an overall configuration of an optical signal exchanger to which the control apparatus of FIG. 1 is applied.
FIG. 3 is a diagram for explaining a concept in the case where output light power of the optical signal exchanger is controlled to maximum.
FIG. 4 is a conceptual diagram for explaining a change in optical output level when switched to a channel with a different optical input level.
FIG. 5 is a diagram for explaining a concept in the case where the optical output level of the optical signal exchanger is controlled to be constant.
FIG. 6 shows a specific circuit configuration of a counter control signal generating circuit and a control and monitoring circuit used in the first embodiment.
FIG. 7 is a timing chart for explaining an operation of a comparison control section in the first embodiment.
FIG. 8 is a functional block diagram showing a constitution of a control apparatus of an optical signal exchanger according to a second embodiment of the present invention.
FIG. 9 is a diagram for explaining a concept of a control operation in the second embodiment.
FIG. 10 is a flowchart showing a judging method for judging whether the control is to continue or be terminated in the second embodiment.
FIG. 11 is a functional block diagram showing a constitution of an essential part of a comparison control section used in a control apparatus of a third embodiment of the present invention.
FIG. 12 is a flowchart for explaining a control operation in the third embodiment.
FIG. 13 is a flowchart for explaining an example of another control operation related to the third embodiment.
FIG. 14 is a flowchart for explaining an application example for achieving an improvement of accuracy in the control operation of FIG. 13.
FIG. 15 is a functional block diagram showing a constitution of a control apparatus of an optical signal exchanger according to a fourth embodiment of the present invention.
FIG. 16 is a flowchart for explaining a control operation in the fourth embodiment.
FIG. 17 is a conceptual diagram for explaining that accuracy in the control operation of FIG. 16 can be improved.
FIG. 18 is a block diagram showing another example related to the fourth embodiment.
FIG. 19 is a functional block diagram showing a constitution of a comparison control section used in a control apparatus of a fifth embodiment of the present invention.
FIG. 20 shows an example where a function is provided for judging an abnormal occurrence in a system connected to a previous stage of the optical signal exchanger related to the fifth embodiment.
FIG. 21 is a functional block diagram showing a constitution of a comparison control section used in a control apparatus of a sixth embodiment of the present invention.
FIG. 22 is a perspective view showing a configuration example of a typical three-dimensional type optical signal exchanger.
FIG. 23 is a functional block diagram showing a configuration example of a control apparatus for minimizing an optical loss inside an optical signal exchanger.
FIG. 24 is a diagram for explaining problems in a control for minimizing an optical loss inside an optical signal exchanger.

Hereunder is a description of embodiments of the present invention, based on the drawings.

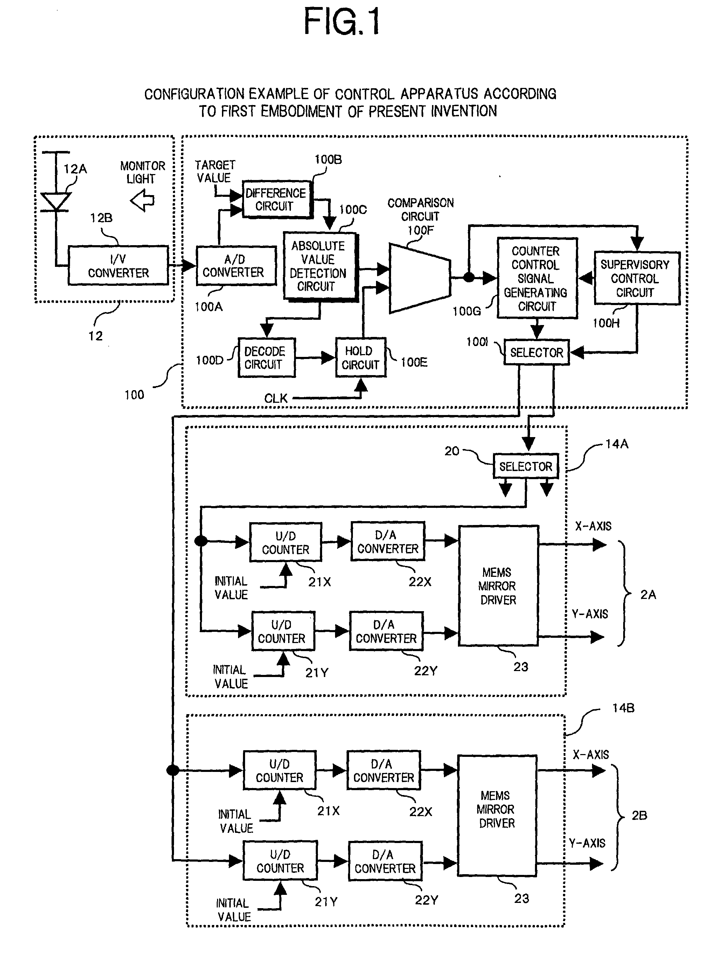

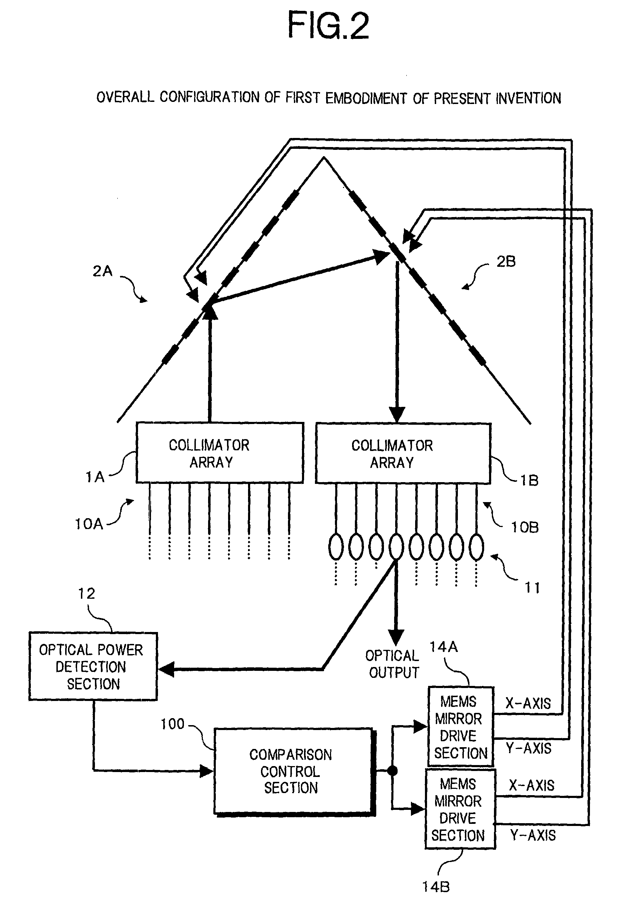

FIG. 1 is a functional block diagram showing a constitution of a control apparatus of an optical signal exchanger according to a first embodiment of the present invention. Further, FIG. 2 is a schematic diagram showing an overall configuration of an optical signal exchanger to which the control apparatus of FIG. 1 is applied. Components the same as those in the conventional constitution shown in FIG. 22 and FIG. 23 are denoted by the same reference symbol.

In the figures, an overall configuration of this embodiment is one where, for example as with the conventional constitution shown in FIG. 23, in an optical signal exchanger of three-dimensional type constituted by combining two collimator arrays 1A and 1B having a plurality of collimators arranged in two dimensions, respectively, and two MEMS mirror arrays 2A and 2B having a plurality of MEMS mirrors arranged in two dimensions corresponding to the collimators of the collimator arrays 1A and 1B, respectively, there is provided a control apparatus comprising: an optical coupler array 11 provided at a latter stage of an output optical fiber array 10B connected to the collimator array 1B on an output side; an optical power detection section 12 that detects power of light branched by each optical coupler of the optical coupler array 11; and a comparison control section 100 that judges a coupling state of an optical signal with respect to an output optical fiber based on the detection result of the optical power detection section 12, to control respective MEMS mirror drive sections 14A and 14B so that an optical output level becomes a constant.

Here, the MEMS mirror array 2A corresponds to a first mirror array, the MEMS mirror array 2B corresponds to a second mirror array, the MEMS mirror drive section 14A corresponds to a first mirror drive section, and the MEMS mirror drive section 14B corresponds to a second mirror drive section.

The collimator array 1A of the optical signal exchanger is connected with an input optical fiber array 10A having a plurality of optical fibers arranged in two dimensions corresponding to the respective collimators, and light emitted from each input optical fiber passes through each collimator to become parallel light, to be sent towards the MEMS mirror array 2A. Further, the collimator array 1 B is connected with an output optical fiber array 10B having a plurality of optical fibers arranged in two dimensions corresponding to the respective collimators, and light reflected by the MEMS mirror array 2B passes through each collimators to be coupled to each output optical fibers.

The MEMS mirror array 2A is arranged to tilt so that the normal direction of a plane on which mirror surfaces of the respective MEMS mirrors are arranged is not parallel to a propagation direction (optical axis direction) of an optical signal sent from the collimator array 1A. Further, the MEMS mirror array 2B is arranged at a required position at which light reflected by the respective MEMS mirrors of the MEMS mirror array 2A is reflected again by the corresponding MEMS mirrors, to be guided to the collimator array 1B. Each of the MEMS mirror arranged in the MEMS mirror arrays 2A and 2B is a known micro tilt mirror made up using micromachining (MEMS) technology. More specifically, for example a movable plate supported by torsion bars and formed with a mirror on an upper surface thereof, is disposed on a silicon substrate integrally, and an oscillation angle of the mirror is variably controlled by rotating the movable plate about the torsion bars with a magnetic force.

In the optical coupler array 11, a plurality of optical couplers are arranged corresponding to the respective output optical fibers of the output optical fiber array 10B, and a part of the optical signal propagated through each output optical fiber is branched by each optical coupler to be sent to the optical power detection section 12.

The optical power detection section 12, for example as shown on an upper left part of FIG. 1, includes a photodetector 12A that receives monitor light branched by each optical coupler of the optical coupler array 11 to generate a current signal corresponding to optical power of the monitor light, and an I/V converter 12B that converts the current signal output from the photodetector 12A into a voltage signal. In FIG. 1, only one set of the photodetector 12A and the I/V converter 12B is shown. However, it is assumed that actually, the optical power detection section 12 is provided with the photodetectors 12A and the I/V converters 12B respectively corresponding to the respective optical couplers of the optical coupler array 11, that is, corresponding to the number of output channels of the optical signal exchanger.

The comparison control section 100, for example as shown at a center top part of FIG. 1, includes an A/D converter 100A, a difference circuit 100B, an absolute value detection circuit 100C, a decode circuit 100D, a hold circuit 100E, a comparison circuit 100F, a counter control signal generating circuit 100G, a supervisory control circuit 100H, and a selector 100I. Here also, only the constitution corresponding to one output channel is shown. However, it is assumed that the actual comparison control circuit 100 comprises a constitution corresponding to the number of output channels of the optical signal exchanger.

The A/D converter 100A is a typical electric circuit that converts an analog voltage signal output from the optical power detection section 12 into a digital signal, and sends the converted digital voltage signal to one input terminal of the difference circuit 100B. The difference circuit 100B that is supplied with a signal indicating a previously set target value at the other input terminal, calculates a difference between an output signal from the A/D converter 100A and the target value, to send the calculation result to the absolute value detection circuit 100C. Setting of the target value to be supplied to the difference circuit 100B will be described later.

The absolute value detection circuit 100C detects an absolute value of the difference calculated by the difference circuit 100B to send the detection result to one input terminal of the comparison circuit 100F, and also to the decode circuit 100D. The decode circuit 100D decodes an output signal from the absolute value detection circuit 100C to output the decoded output signal to the hold circuit 100E. The hold circuit 100E that is input with a clock signal CLK of required frequency, holds the output signal from the decode circuit 100D for a previously set constant time, and thereafter sends it to the other input terminal of the comparison circuit 100F. The time during which the signal is held in the hold circuit 100E, is set for example corresponding to a time during which a feedback control of the respective MEMS mirrors, to be described later, is completed for one cycle.

The comparison circuit 100F is a circuit that performs a large/small comparison of voltage values indicated by the digital signals respectively sent from the absolute value detection circuit 100C and the hold circuit 100E, to transmit the comparison result to the counter control signal generating circuit 100G and the supervisory control circuit 100H. More specifically, the comparison circuit 100F outputs a low level signal if the digital signal (voltage value after control) from the absolute value detection circuit 100C is larger than the digital signal (voltage signal before control) from the hold circuit 100E, for example, while outputting a high level signal if smaller. An output logic level of such a comparison circuit 100F is the reversal of the output logic level of a similar comparison circuit used in the comparison control section 13 in the abovementioned conventional constitution shown in FIG. 23.

The counter control signal generating circuit 100G generates a counter control signal according to the level of the output signal from the comparison circuit 100F. This counter control signal is for controlling count values of U/D counters 21X and 21Y to be described later of the respective MEMS mirror drive sections 14A and 14B. Here, the counter control signal generated by the counter control signal generating circuit 100G is distributed to the corresponding MEMS mirror drive sections 14A and 14B via the selector 100I.

The supervisory control circuit 100H is a circuit for generating, according to the output signal from the comparison circuit 100F, a command for determining whether the counter control signal generating circuit 100G is to supply the counter control signal for increasing the count value (hereunder referred to as a count up signal) or is to supply the counter control signal for reducing the count value (hereunder a count down signal), with respect to the level of the output signal from the comparison circuit 100F, to transmit the command to the counter control signal generating circuit 100G and the selector 100I.

The MEMS mirror drive section 14A is for drive controlling the MEMS mirror array 2A on an input side of the optical signal exchanger. More specifically, the MEMS mirror drive section 14A includes, for example as shown at a center part of FIG. 1, a selector 20, the U/D counter 21 X and a D/A converter 22X corresponding to an X-axis direction, the U/D counter 21Y and a D/A converter 22Y corresponding to a Y-axis direction, and an MEMS mirror driver 23, corresponding to the respective MEMS mirrors of the MEMS mirror array 2A. Further, the MEMS mirror drive section 14B is for drive controlling the MEMS mirror array 2B on an output side of the optical signal converter. More specifically, the MEMS mirror drive section 14B includes, for example as shown at a bottom part of FIG. 1, the U/D counter 21X and a D/A converter 22X corresponding to the X-axis direction, the U/D counter 21Y and a D/A converter 22Y corresponding to the Y-axis direction, and an MEMS mirror driver 23, corresponding to the respective MEMS mirrors of the MEMS mirror array 2B. In the respective MEMS mirror drive sections 14A and 14B of FIG. 1, only the constitution corresponding to one MEMS mirror (one channel) is shown.

The selector 20 provided in the MEMS mirror drive section 14A, according to the counter control signal from the comparison control section 100, selects the MEMS mirror being a control object, from the plurality of MEMS mirrors arranged in the MEMS mirror array 2A, to transmit the counter control signal to a circuit block corresponding to the selected MEMS mirror. This selection operation of the selector 20 is set as a result that the selector 20 is given with information related to an input channel corresponding to the output channel of the light detected by the optical power detection section 12. The selector 20 as described above is not provided in the MEMS mirror drive section 14B. This is because once the output channel of the light detected by the optical power detection section 12 is determined, the MEMS mirror corresponding to this output channel is specified from the MEMS mirrors of the MEMS mirror array 2B.

The U/D counter 21X provided in each of the MEMS mirror drive sections 14A and 14B increases or decreases the count value for the X-axis direction of the MEMS mirror in accordance with the counter control signal from the comparison control section 100, to output the increased or decreased count value to the D/A converter 22X. The D/A converter 22X converts the digitally represented count value from the U/D counter 21X into an analog value, to output to the MEMS mirror driver 23. Further, the U/D counter 21 Y increases or decreases the count value for the Y-axis direction of the MEMS mirror in accordance with the counter control signal from the comparison control section 100, to output the increased or decreased count value to the D/A converter 22Y. The D/A converter 22Y converts the digitally represented count value from the U/D counter 21Y into an analog value, to output to the MEMS mirror driver 23.

It is desirable that an initial counter value previously set according to the input/output channel is supplied to each of the U/D counters 21X and 21Y in order to improve a mirror adjustment speed, that is, to shorten a feedback time. A specific setting method of this initial counter value will be described later.

The MEMS mirror driver 23 provided in each of the MEMS mirror drive sections 14A and 14B generates a signal for drive controlling an angle in the X-axis direction or the Y-axis direction of the corresponding MEMS mirror, in accordance with the counter value corresponding to each axis direction. The drive control signal generated by each of the MEMS mirror drive sections 14A and 14B is supplied to the corresponding MEMS mirror of each of the MEMS mirror arrays 2A and 2B to thereby adjust an angle of a reflecting surface.

Next is a description of an operation of the first embodiment.

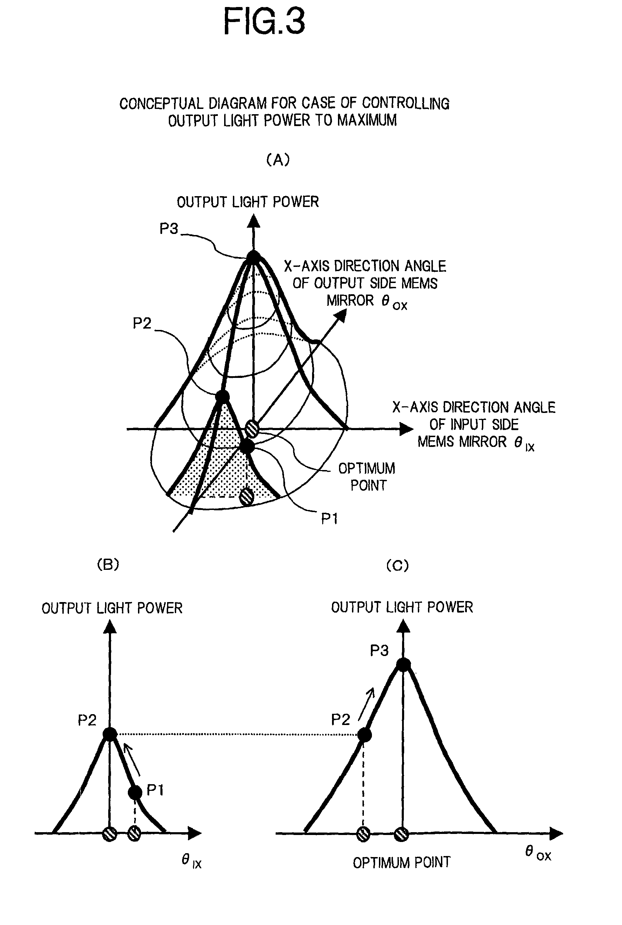

Firstly, a relationship between the power of the optical signal coupled to the output optical fiber, and an angle between the MEMS mirrors on the input side and the output side, will be described referring to a characteristic diagram of FIG. 3.

For the optical signal exchanger having the three-dimensional constitution shown in FIG. 22, as shown in (A) of FIG. 3, the characteristic thereof is confirmed that an optimum point of the mirror angle where the output light power becomes maximum, coincides with a point where the output light power for the MEMS mirrors on the input side and the output side each become maximized, and a change in the output light power relative to an angle change in the input side MEMS mirror, and the change in the output light power relative to an angle change in the output side MEMS mirror are not mutually dependent, to be in an independent relationship.

In FIG. 3, there is shown an aspect of the change in the output light power for when the angle of each MEMS mirror is changed in the X-axis direction. However, the above characteristic is also confirmed for when the angle of each MEMS mirror is changed in the Y-axis direction. Further, the change characteristic of the output light power for when the angle of the input side MEMS mirror in the X-axis (Y-axis) direction and the angle of the output side MEMS mirror in the Y-axis (X-axis) direction are changed is also the same as the above described characteristic. Moreover, the change characteristic of the output light power for when the angles in the X-axis and Y-axis directions of the MEMS mirror on one side are changed is also the same as the above described characteristic. Hereunder, the description is given assuming the case where the angles of the input side and output side MEMS mirrors in the X-axis direction are changed (the angle in the Y-axis direction is fixed). However, the same consideration can be made for the abovementioned other combinations.

In the case of the abovementioned conventional control technique, the angles of the respective MEMS mirrors on the input side and the output side are optimized so that an optical loss in the optical signal exchanger becomes minimum, that is, the power of the optical signal coupled to the output optical fiber becomes maximum. In this case, for example in a state where the output light power as shown by a point P1 of (A) of FIG. 3 is obtained, at first as shown in (B) of FIG. 3, the angle of the output side MEMS mirror is fixed and the angle of the input side MEMS mirror is adjusted, to thereby realize a state of point P2 where the output light power becomes maximized. Then, as shown in (C) of FIG. 3, the angle of the input side MEMS mirror is fixed, and the angle of the output side MEMS mirror is adjusted, to thereby realize a state of point P3 where the output light power becomes maximized. As a result, the angle of each MEMS mirror can be controlled to the optimum point where the output light power becomes maximum (the optical loss of the optical signal exchanger becomes minimum).

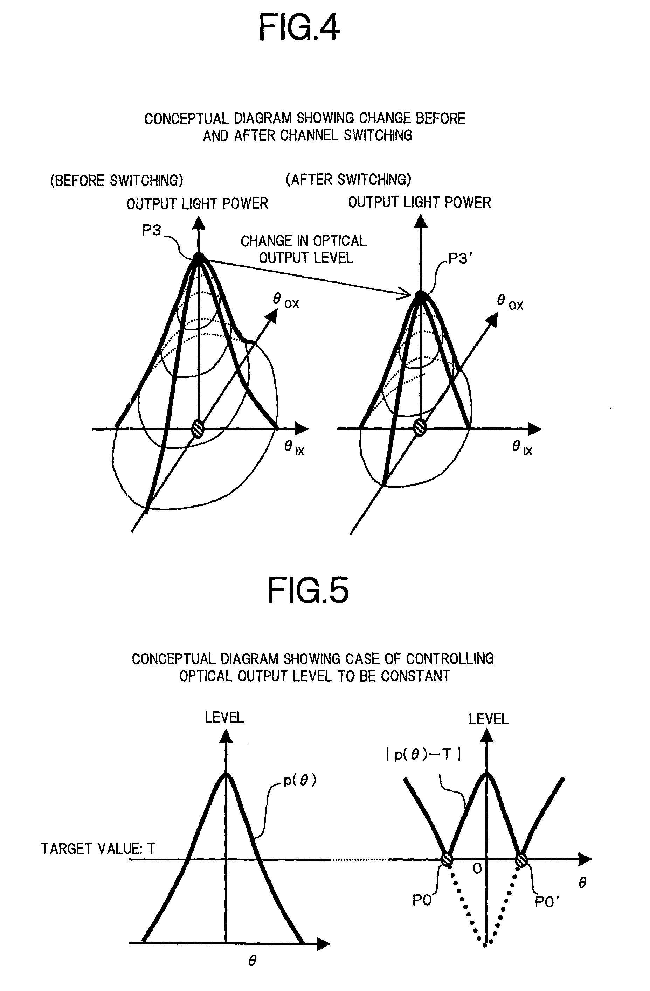

Incidentally, the output light power obtained under the state where the angle of each MEMS mirror on the input side and the output side is controlled to the optimum point as described above, is increased if an optical input level of the optical signal is high, and is decreased if the optical input level thereof is low. For example, in the case of switching from a channel of high optical input level to a channel of low optical input level by means of the channel switching, the relationship between the output light power of the optical signal coupled to the same output optical fiber and the angle of each MEMS mirror, is changed from the state of before switching as shown on the left side of FIG. 4 to the state of after switching as shown on the right side of FIG. 4. Therefore, is a control for maximizing the output light power (minimizing the optical loss) is applied, the optical output level is changed from the point P3 of before switching to a point P3' of after switching. This change in the optical output level of before and after channel switching may influence on a system connected to a latter stage of the optical signal exchanger, as described above.

Therefore, in a control system of the optical signal exchanger according to the present invention, a target value of the optical output level for each channel on the output side is previously set, and the angle of each MEMS mirror is feedback controlled so that the output optical level becomes constant at the target value regardless of the change in the optical input level due to the channel switching, to thereby avoid the influence on the latter stage system, due to the change in the optical output level. Such a constant control of the optical output level can be performed based on an absolute value of a difference between the optical output level actually detected and a previously set target value T of the optical output level, as shown for example in a conceptual diagram of FIG. 5. That is to say, when an optical output level p(θ) corresponding to an angle θ of the MEMS mirror detected by the optical power detection section 12 has a relationship as shown on the left side of FIG. 5 with respect to the target value T of the optical output level, an absolute value |p(θ) - T| of the difference of the optical output level p(θ) to the target value T is changed as shown on the right side of FIG. 5. Therefore, the angle of the MEMS mirror in each axis direction on the input side and the output side is adjusted, in order to realize a state of a point P0 or a point P0' where the absolute value |p(θ) - T| becomes zero, thereby enabling to control the optical output level to be constant at the target value T.

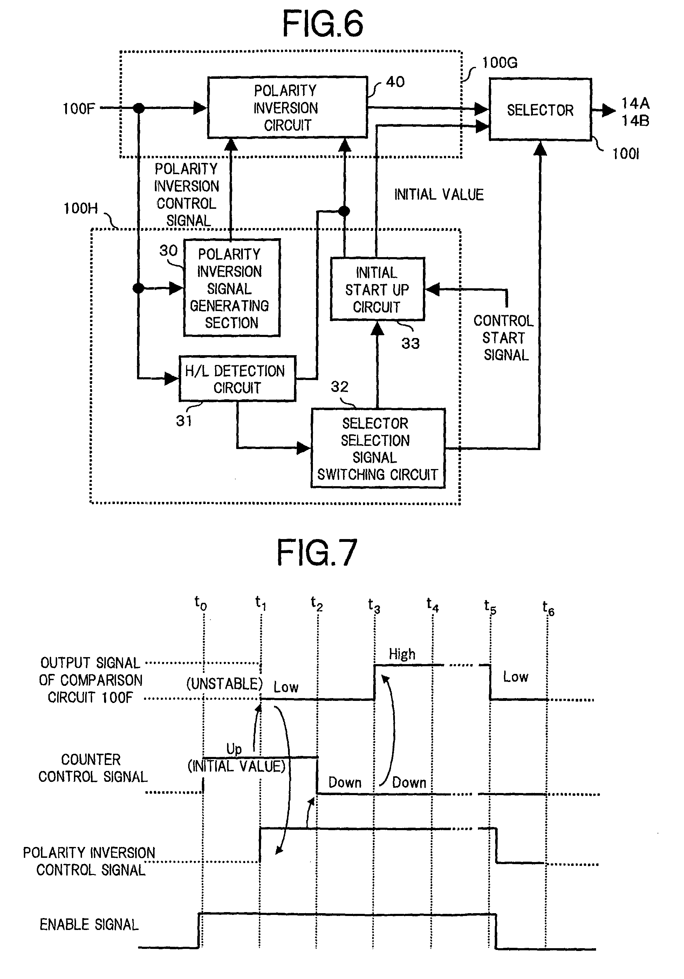

Based on the control system as described above, in the control apparatus of this embodiment, for example a specific circuit configuration as shown in FIG. 6 is applied to the counter control signal generating circuit 100G and the supervisory control circuit 100H of the comparison control section 100, to thereby control the angles of the respective MEMS mirrors.

In the specific example shown in FIG. 6, a polarity inversion circuit 40 is provided as a component of the counter control signal generating circuit 100G. Further, for the supervisory control circuit 100H, a signal indicating the comparison result by the comparison circuit 100F is respectively input to a polarity inversion signal generating section 30 and an H/L detection circuit 31, and a polarity inversion control signal generated by the polarity inversion signal generating section 30 is output to the polarity inversion circuit 40. The H/L detection circuit 31 supervises an output signal level from the comparison circuit 100F, and if a change from a high level to a low level is detected, a signal informing the change is output to a selector selection signal switching circuit 32, and a disable signal for nullifying an operation of the polarity inversion circuit 40 is output to the polarity inversion circuit 40. In the selector selection signal switching circuit 32, it is judged according to the output signal from the H/L detection circuit 31, that the absolute value of the difference of the optical output level to the target value T has become zero, and a selection signal for switching the selector 100I is generated, to be sent to the selector 100I and an initial start up circuit 33. The initial start up circuit 33, when a control start signal for signaling starting of angle correction is input thereto, supplies an initial value to the selector 100I, and also outputs an enable signal to make the operation of the polarity inversion circuit 40 effective. An output condition of the enable signal supplied from the initial start up circuit 33 to the polarity inversion circuit 40 is controlled according to the output signal from the selector selection signal switching circuit 32.

In the comparison control section 100 provided with the abovementioned circuit configuration, for example as shown in a timing chart of FIG. 7, at first, if the control start signal is input to the initial start up circuit 33 at a time t₀, the initial start up circuit 33 supplies to the selector 100I as an initial value of the counter control signal, for example, a count up signal for instructing an increase in the count value, and at the same time, supplies the enable signal to the polarity inversion circuit 40. As a result, control operations of the respective sections are started. Here, the setting is such that the count up signal is supplied to the selector 100I as the initial value, however, the setting may be such that a count down signal instructing a decrease in the count value is supplied as the initial value.

The count up signal supplied to the selector 100I is distributed to the respective MEMS mirror drive sections 14A and 14B, and the count up signal sent to the MEMS mirror drive section 14A is further distributed by the selector 20 to be sent to a circuit block corresponding to the MEMS mirror on the input side being the object of angle control. Moreover, the count up signal sent to the MEMS mirror drive section 14B is sent to a circuit block corresponding to the MEMS mirror on the output side being the object of angle control (the channel for which monitoring of the output light power is performed by the optical power detection section 12). Here, considering the case where for example the angle in the X-axis direction of the MEMS mirror on the input side is correction controlled, then at the time of starting the control, the count up signal from the comparison control section 100 is input to the U/D counter 21X on the X-axis side of the MEMS mirror drive section 14A.

In the U/D counter 21X that has received the input of the count up signal, the previously set counter initial value is increased, and this count value is output to the D/A converter 22X to be D/A converted. Then, the output signal from the D/A converter 22X is sent to the MEMS mirror driver 23, and the drive control signal is generated for controlling the angle in the X-axis direction of the MEMS mirror on the input side according to the count value of the U/D counter 21X, to be supplied to the MEMS mirror array 2A. As a result, the angle in the X-axis direction of the corresponding MEMS mirror of the MEMS mirror array 2A on the input side is changed, and a coupling state with respect to the output optical fiber, of the optical signal reflected by the input side MEMS mirror and the output side MEMS mirror corresponding to the input side MEMS mirror is changed. Then, a part of the optical signal coupled to the output optical fiber is branched by the optical coupler 11 to be sent to the optical power detection section 12. In the optical power detection section 12, monitor light from the optical coupler 11 is received by the photodetector 12A, and a current signal according to the optical power is generated and converted into a voltage signal by the I/V converter 12B, to be output to the comparison control section 100.

The voltage signal according to the monitor result of the output light power is converted into a digital signal by the A/D converter 100A of the comparison control section 100, to be sent to the difference circuit 100B. In the difference circuit 100B, the difference between a digital signal indicating the previously set target value of the optical output level, and the digital signal from the A/D converter 100A is calculated, and the calculation result is sent to the absolute value detection circuit 100C. In the absolute value detection circuit 100C, the absolute value of the difference calculated by the difference circuit 100B is detected, and the detection result is sent to the comparison circuit 100F and to the decode circuit 100D. In the comparison circuit 100F that is supplied with a voltage value according to the output light power in the state before changing the angle in the X-axis direction of the input side MEMS mirror, from the hold circuit 100E, a comparison is made between this voltage value and the voltage value from the absolute value detection circuit 100C. Then, in the case where, by changing the angle in the X-axis direction of the input side MEMS mirror, the absolute value of the difference becomes larger, the comparison circuit 100F generates a low level output signal, while in the case where the absolute value of the difference becomes small, the comparison circuit 100F generates a high level output signal.

Here, in the case where, by means of the count up signal supplied to the selector 100l as the initial signal, the absolute value of the difference is changed to decrease, it is necessary to perform the operation setting of the counter control signal generating circuit 100G so as to generate the count up signal for the high level output signal from the comparison circuit 100F, and to generate the count down signal for the low level output signal from the comparison circuit 100F. Further, in the case where the absolute value of the difference is changed to increase, it is necessary to perform the operation setting of the counter control signal generating circuit 100G so as to generate the count down signal for the high level output signal from the comparison circuit 100F, and to generate the count up signal for the low level output signal from the comparison circuit 100F. In order to realize such operation setting of the counter control signal generating circuit 100G, in this embodiment, the polarity inversion signal generating section 30 is provided in the supervisory control circuit 100H. The polarity inversion signal generating section 30 generates to send to the polarity inversion circuit 40, the polarity inversion control signal to inversion operate the polarity inversion circuit 40 when the output signal from the comparison circuit 100F is detected to be at a low level, and not to inversion operate the polarity inversion circuit 40 when the output signal is detected to be at a high level. As a result, in the setting where the polarity inversion circuit 40 is not inversion operated, the output level of the counter control signal generating circuit 100G becomes equal to the level of the output signal from the comparison circuit 100F, and the count up signal of high level is output for the high level output of the comparison circuit 100F, and the count down signal of low level is output for the low level output of the comparison circuit 100F. On the other hand, in the setting where the polarity inversion circuit 40 is inversion operated, the count down signal of low level is output for the high level output of the comparison circuit 100F, and the count up signal of high level is output for the low level output of the comparison circuit 100F.

Here, for example as shown at a time of t₁ to t₂ in FIG. 7, if the output signal from the comparison circuit 100F becomes a low level with respect to the count up signal as the initial value, the polarity inversion signal of high level is generated for inversion operating the polarity inversion circuit 40. As a result, the counter control signal that has been set to the count up signal of high level as the initial value is switched to the count down signal of low level as shown at a time of t₂ to t₃, to be sent via the selectors 100I and 20, to the U/D counter 21X of the MEMS mirror drive section 14A. Then, due to the decrease in the count value of the U/D counter 21X, the angle of the input side MEMS mirror is controlled oppositely to the control starting time, and the absolute value of the difference is changed to decrease, and as shown at a time of t₃ to t₄ in FIG. 7, the output signal from the comparison circuit 100F becomes a high level. This high level output signal from the comparison circuit 100F is inverted by the polarity inversion circuit 40, to be output from the counter control signal generating circuit 100G as the count down signal of low level. In accordance with such a count down signal, the angle adjustment of the input side MEMS mirror is repeated until the absolute value of the difference becomes zero.

When the absolute value of the difference becomes zero, then as shown at a time of t₅ to t₆ in FIG. 7, the output signal from the comparison circuit 100F is changed to a low level. This change of the output level of the comparison circuit 100F from high to low is detected by the H/L detection circuit 31 of the comparison control section 100, and the signal informing of this change, is sent to the selector selection signal switching circuit 32, and also the enable signal that has been supplied to the polarity inversion circuit 40 is cancelled, and instead, the disable signal is sent to the polarity inversion circuit 40 from the H/L detection circuit 31. Further, the polarity inversion signal output at this time from the inversion signal generating section 30 is cancelled. Then, in the selector selection signal switching circuit 32, based on the input of the signal from the H/L detection circuit 31, it is judged that the angle in the X-axis direction of the input side MEMS mirror is controlled to an optimum condition, and the control is terminated.

Here, it is judged that the angle in the X-axis direction of the input side MEMS mirror is optimized at the point in time when the output signal from the comparison circuit 100F is changed to the low level. However, the constitution may be such that for example the counter control signal is switched from the count down signal to the count up signal in a control cycle for when the output signal from the comparison circuit 100F is changed to the low level, and in the next control cycle, the angle of the input side MEMS mirror is restored so as to be in the condition before the output signal from the comparison circuit 100F is changed to the low level. Whether or not such a control is performed is judged according to accuracy and so forth of the angle control.

According to the control apparatus of the first embodiment as described above, the optical output level of the optical signal exchanger can be maintained constant at the target value irrespective of the change in the optical input level. As a result, the system connected to the latter stage of the optical signal exchanger can be operated stably. If the conventional control for minimizing the optical loss in the optical signal exchanger is applied to realize the abovementioned stable operation of the latter stage system, then it is necessary to provide for example a variable optical attenuator or the like, to adjust the optical output level. However according to the control of the present embodiment, since the abovementioned variable optical attenuator or the like becomes unnecessary, it is also possible to achieve a substantial reduction in the number of parts.

In the abovementioned first embodiment, the angle in the X-axis direction of the input side MEMS mirror has been controlled. However, it is also possible to control the angle in the Y-axis direction of the input side MEMS mirror, or to control the angles in the X-axis and Y-axis directions of the output side MEMS mirror. In the present invention, the MEMS mirrors for which the angle control is performed and the axis directions thereof can be arbitrarily set since, as described in FIG. 3, the change in output light power is independent for each of the respective MEMS mirrors and for each axis direction.

Next is a description of a control apparatus of an optical signal exchanger according to a second embodiment of the present invention.

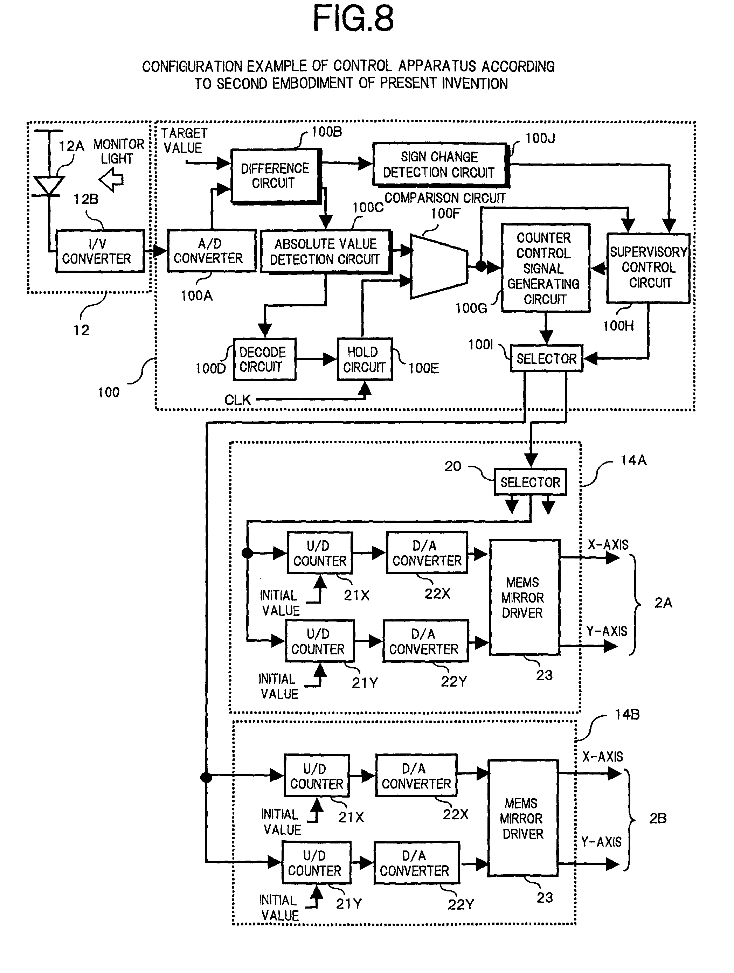

FIG. 8 is a functional block diagram showing a constitution of a control apparatus of an optical signal exchanger according to the second embodiment. Components the same as those in the constitution of the first embodiment are denoted by the same reference symbols and description thereof is omitted, with the same applying hereunder to the other embodiments.

In FIG. 8, the part where the constitution of the control apparatus of this embodiment is different to that in the case of the first embodiment is that in the comparison control section 100, there is provided a sign change detection circuit 100J that detects whether or not a sign of the value of the difference calculated by the difference circuit 100B has reversed, and the detection result is transmitted to the supervisory control circuit 100H. Components other than the above are the same as those in the case of the first embodiment.

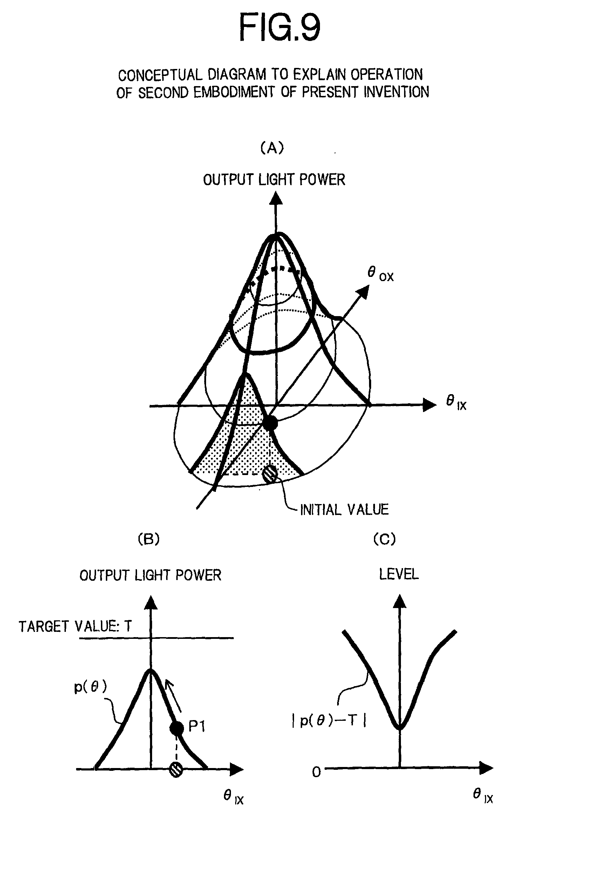

In the first embodiment, for example as shown in (A) of FIG. 9, when the target value of the optical output level is set to a high level, in the case where the initial value supplied to each of the U/D counters 21X and 21Y of the respective MEMS mirror drive sections 14A and 14B is set corresponding to a position greatly apart from the point P3 where the optical output power becomes maximum, then as shown in (B) of FIG. 9, by merely controlling the angle of the MEMS mirror for one axis direction, the maximum level of the optical output power in this axis direction becomes less than the target value. Therefore, at an intermediate stage before reaching the control target, as shown in (C) of FIG. 9, a circumstance may occur where the absolute value of the difference of the optical output power to the target value becomes minimum, that is, the absolute value of the difference does not become zero.

Consequently, in the control apparatus of the second embodiment, whether or not the sign of the value of the difference calculated by the difference circuit 100B of the comparison control section 100 has reversed is detected by the sign change detection circuit 100J, and according to the detection result, it is judged whether to continue or terminate the control. As a result, it is also possible to deal with the abovementioned case where only by the angle control in the single axis direction, the absolute value of the difference does not become zero.

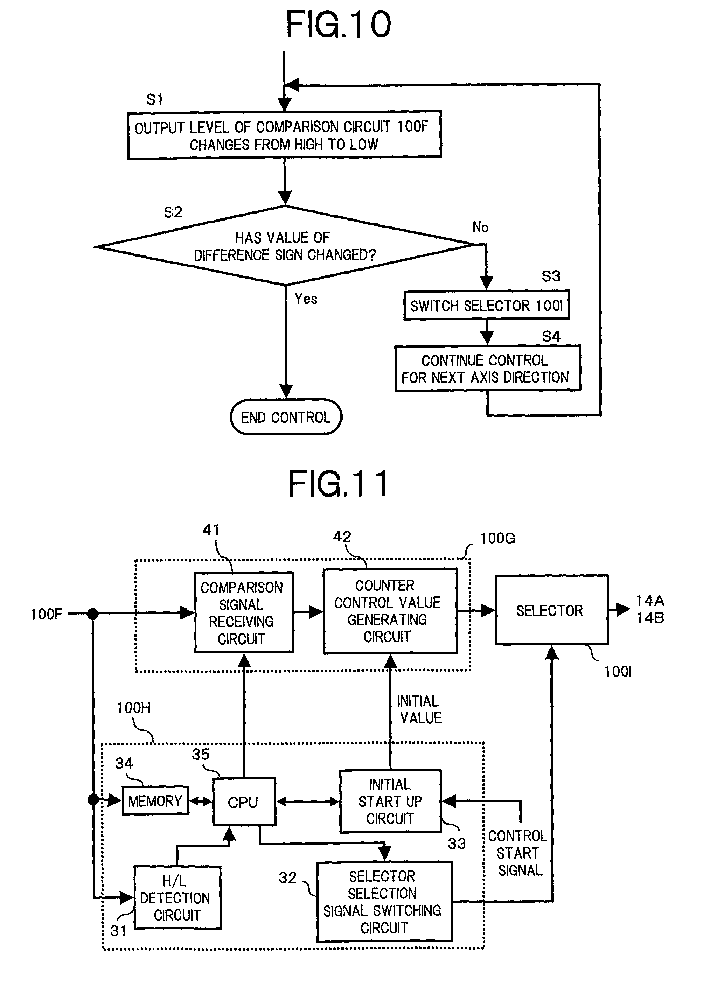

In a specific judgment method as to whether or not to continue or terminate the abovementioned control, for example as shown by a flowchart of FIG. 10, if in step 1 (shown as S1 in the figure and similarly hereunder for other steps) it is detected by the H/L detection circuit 31 (FIG. 6) of the supervisory control circuit 100H that the output logic level of the comparison circuit 100F has been changed from high to low, and then in step 2, it is judged whether or not the sign change in the value of the difference has been detected by the sign change detection circuit 100J. In the case where the sign change has been detected, it is judged that the absolute value of the difference has become zero, and the control is terminated. On the other hand, in the case where the sign change has not been detected, the aforementioned circumstance as shown in (C) of FIG. 9 is judged, and control proceeds to step 3. In step 3, the control signal for instructing switching of the axis direction, is sent from the selector selection signal switching circuit 32 (FIG. 6) of the supervisory control circuit 100H, to the selector 100I. Then in step 4, the controls of other axis directions are continued. Note, termination of the control when the sign change is detected, is performed for example by sending a control signal for stopping the selection operation, from the selector selection signal switching circuit 32 to the selector 100I.

In this manner, according to the control apparatus of the second embodiment, by providing the sign change detection circuit, the constant control of the optical output level can be more reliably and stably performed.

Next is a description of a control apparatus for an optical signal exchanger according to a third embodiment of the present invention.

In the case where the conventional control for minimizing the optical loss of the optical signal exchanger is performed, the combination of the optimum angles of the respective MEMS mirrors is only one. In contrast to this, in the case where the constant control of the optical output level is performed as described in the abovementioned first and second embodiments, the combination of the optimum angles of the respective MEMS mirrors becomes multiple. Moreover, as described for the second embodiment, there also exists the case where it is difficult to complete the control using only one axis direction. Taking into consideration such a characteristic in the constant control of the optical output level, in the third embodiment, a description is given for an improved example that enables the angle controls of a plurality of axis directions to be efficiently performed with a series of processes.

FIG. 11 is a functional block diagram showing a constitution of an essential part of a comparison control section used in the control apparatus of the third embodiment.

In FIG. 11, in the control apparatus of the third embodiment, a comparison signal receiving circuit 41 and a counter control value generating circuit 42 are provided in the counter control signal generating circuit 100G of the comparison control section 100, instead of the abovementioned polarity inversion circuit 40 shown in FIG. 6, and a memory 34 and a CPU 35 are provided in the supervisory control circuit 100H, instead of the abovementioned polarity inversion signal generating section 30 shown in FIG. 6. The constitution other than the above is the same as that in the case of the second embodiment.

The comparison signal receiving circuit 41 of the counter control signal generating circuit 100G receives a signal indicating the result of comparison by the comparison circuit 100F, and transmits this signal to the counter control value generating circuit 42 in accordance with a control signal from the CPU 35 of the supervisory control circuit 100H. The counter control value generating circuit 42, based on the comparison result transmitted via the comparison signal receiving circuit 41, determines a counter control value corresponding to the control signal that has been sent from the CPU 35, to output the counter control value to the selector 100I.

The memory 34 of the supervisory control section 100H is a known storage medium capable of storing the result of comparison by the comparison circuit 100F. The CPU 35, based on the respective output signals from the H/L detection circuit 31 and the initial start up circuit 33, and also stored information in the memory 34, determines a direction to which the angle of each MEMS mirror is changed, that is to say, a control direction to which the absolute value of the difference of the output light power to the target value approaches zero, to control all of the angle correction for the respective MEMS mirrors.

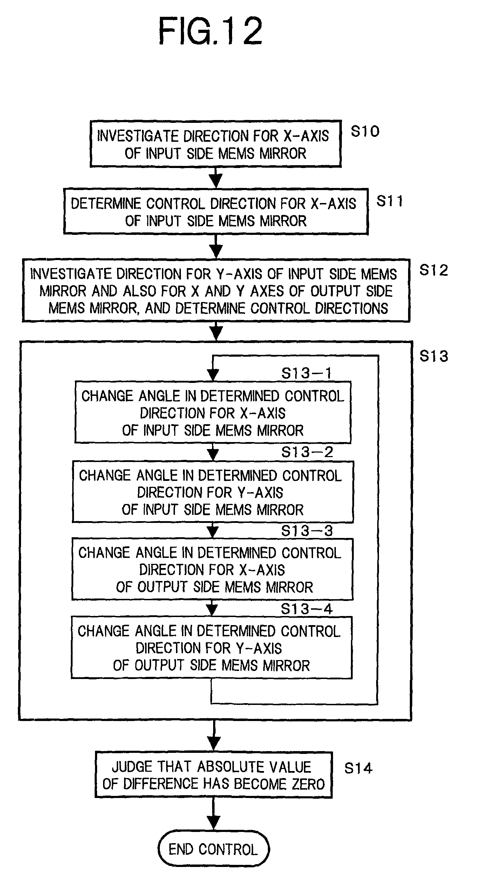

In the control apparatus of the optical signal exchanger of the abovementioned constitution, for example as shown in a flowchart of FIG. 12, at first in step 10, in a so called initial state before moving each MEMS mirror, for example, the count value of the U/D counter 21X of the MEMS mirror drive section 14A is changed so that the corresponding MEMS mirror is moved in one direction, and the comparison result by the comparison circuit 100F which reflects this change, is stored in the memory 34 (direction investigation).

In step 11, the CPU 35 refers to the stored information in the memory 34, to determine a direction to which the relevant MEMS mirror is controlled, that is to say, the control direction to which the absolute value of the difference to the target value approaches zero, and saves the result of determination in the memory 34. At the time of determining this control direction, as described above, if the output of the comparison circuit 100F is at a high level relative to the direction to which each MEMS mirror is moved from the initial state, then this direction becomes the control direction, while if the output of the comparison circuit 100F is at a low level, a direction opposite to the direction to which each MEMS mirror is moved from the initial state becomes the control direction.

Then in step 12, the control directions for the U/D counter 21Y of the MEMS mirror drive section 14A and the U/D counters 21X and 21Y of the MEMS mirror drive section 14B are sequentially determined to be stored in the memory 34, as with step 10 and step 11.

Once the control directions for the respective axes of the respective MEMS mirrors on the input side and the output side have been determined, then in step 13, the rotations of four control directions are made up by the CPU 35, and the constant control of the optical output level, the same as in the second embodiment, is sequentially executed for each one axis (step 13-1 through step 13-4). At this time, as shown in (C) of FIG. 9, there is the case where, during the controls of the respective axis directions, a minimum value is detected before the absolute value of the difference reaches zero. In this case, when the change from high level to low level is detected by the H/L detection circuit 31 of the supervisory control circuit 100H, without the sign change being detected by the sign change detection circuit 100J (FIG. 8) of the comparison control section 100, the CPU 35 sends a command to the counter control value generating circuit 42 and the selector selection signal switching circuit 32 so that the control of the relevant axis direction is terminated, and the controls of the other axis directions are continued in accordance with the abovementioned rotations.

Then, in step 14, after the detection of sign change by the sign change detection circuit 100J and the detection of level change by the H/L detection circuit 31 are confirmed, it is judged that the optical output level has reached the target value, and the overall control is terminated.

In this manner, according to the third embodiment, even in the case where, in the initial state of control, the control directions of the X-axis and Y-axis of the respective MEMS mirrors on the input side and the output side are determined and the rotations of the respective axis directions are made up, to perform the control, the constant control of the optical output level can be reliably and stably performed.

In the third embodiment, the modified example of the constitution of the second embodiment has been shown. However, this modified example can be similarly applied to the constitution of the first embodiment. In this case, so far as the target value of the optical output level is set so as not to exceed the maximum value of the output light power in the respective axis directions, the optical output level can be reliably controlled to the target value.

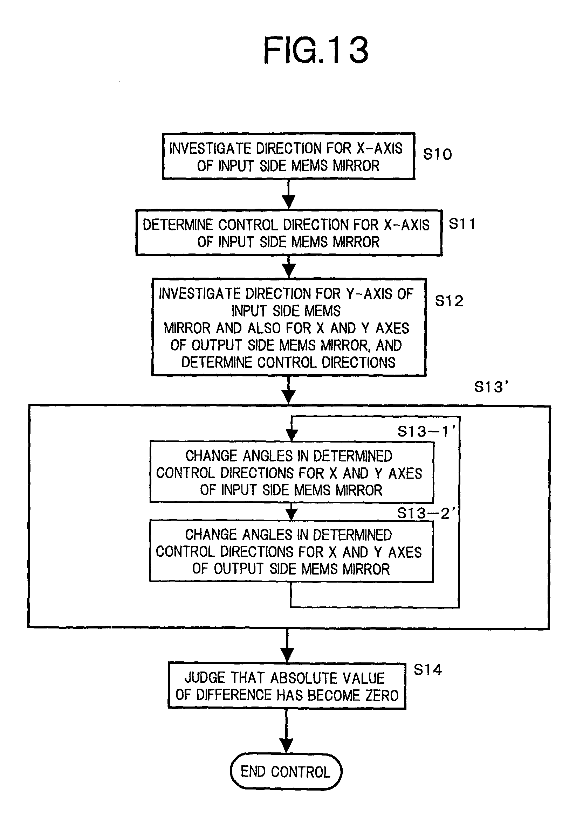

Further, in the third embodiment, the system has been such that the control directions of the X-axis and Y-axis of the respective MEMS mirrors on the input side and the output side are determined and the rotations are made up, to switch the control of each one axis. However, it is possible to perform the controls of the plurality of axis directions simultaneously after determining the respective control directions. More specifically, for example as shown in a flowchart of FIG. 13, it is possible to perform simultaneously the controls of the X-axis and Y-axis of the input side MEMS mirrors in step 13-1', and to perform simultaneously the controls of the X-axis and Y-axis of the output side MEMS mirrors in step 13-2'. If such a control system is adopted, then an effect the same as for the abovementioned case can be obtained, and also the control time for the optical output level to reach the target value can be shortened.

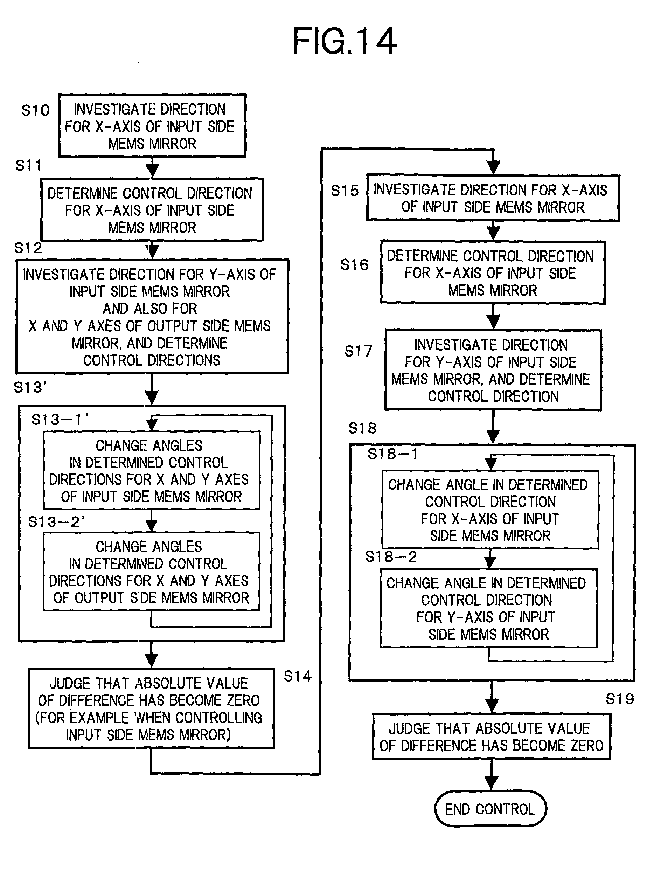

However, in the case where the controls of the plurality of axis directions are performed simultaneously as described above, the control value per one control cycle becomes rougher compared to the case where the control is performed for each one axis, resulting in the reduction in control accuracy. In order to avoid such reduction in control accuracy, it is effective to perform the control in accordance with procedures shown for example in a flowchart of FIG. 14. That is to say, as in the flow chart of FIG. 13, if the respective processes of step 10 through step 14 are executed and it is judged that the absolute value of the difference reaches zero in any of the axis directions, then in step 15, after the series of control in accordance with the rotation is once stopped, the count value of the U/D counter 21X of the MEMS mirror drive section 14A is changed corresponding to a finally controlled direction (the X-axis and Y-axis direction of the input side MEMS mirror, in the example of FIG. 14), to perform the direction investigation. Then, in step 16, the control direction of the X-axis of the MEMS mirror on the input side is determined. Further, in step 17, the direction investigation is similarly performed for the Y-axis of the MEMS mirror on the input side, to determine the control direction. Then, , in step 18, in accordance with the newly determined control direction the control of the MEMS mirror on the input side is performed for each one axis, and in step 19, it is judged that the absolute value of the difference reaches zero, thereby terminating the overall control. By adopting such a control system, the constant control of the optical output level can be performed in a short time, while maintaining the high accuracy.

Next is a description of a control apparatus for an optical signal exchanger according to a fourth embodiment of the present invention.

In the abovementioned third embodiment, the direction investigation is performed beforehand for the X-axis and Y-axis of the respective MEMS mirrors on the input side and the output side, to determine the control direction. In the fourth embodiment, a modified example is described where the initial values to be supplied to the U/D counters 21X and 21Y of the respective MEMS mirror drive sections 14A and 14B are specifically defined, so that the processing for determining the control direction as in the third embodiment can be omitted, to achieve the shortening of the processing time and the like.

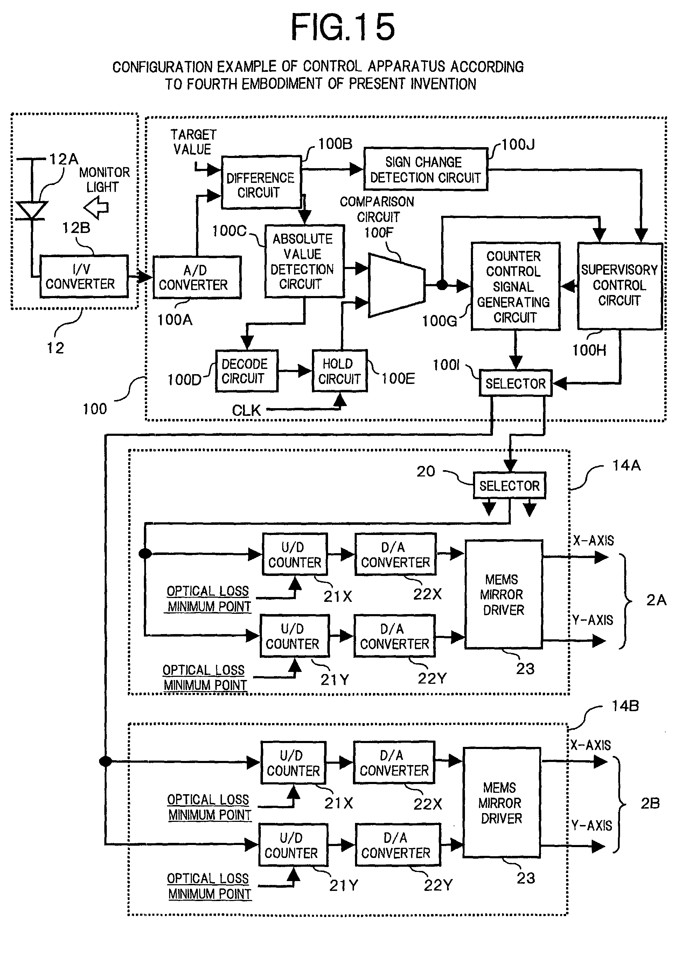

FIG. 15 is a functional block diagram showing a constitution of the control apparatus of the optical signal exchanger according to the fourth embodiment.

In FIG. 15, the control apparatus of this embodiment is constituted such that, for example in the constitution of the second embodiment shown in FIG. 8, the count value equivalent to the point where the output light power becomes maximum, that is to say, the point where the optical loss inside the optical signal exchanger becomes minimum (hereunder the optical loss minimum point) is applied as the initial value to the U/D counters 21X and 21Y of the respective MEMS mirror drive sections 14A and 14B, corresponding to the combination of the input and output channels. The count value equivalent to the optical loss minimum point corresponding to the combination of the input and output channels, becomes a basically known value by determining the arrangement of optical system inside the optical signal exchanger. By supplying such a count value equivalent to the optical loss minimum point as the initial value in the initial state of the control, the angle of each MEMS mirror is set so that the output light power becomes close to the maximum value in any of the respective axis directions. Hence, no matter which direction the control direction is set, the output light power is changed to decrease (refer to FIG. 3 and FIG. 5). Therefore, different from the third embodiment, there is no longer necessary to perform the direction investigation in the initial state of the control of the respective axis directions to determine the control direction beforehand. As a result, it becomes possible to shorten the processing time for the constant control of the optical output level. And also, if the target value of the optical output level is set to be equal to or less than the maximum value of the output light power in the respective axis directions, it is possible to make the optical output level constant with the control of only one axis. Further, in the case where the target value is set to exceed the maximum value, the optical output level can be made constant by switching the controls of the plurality of axis directions.

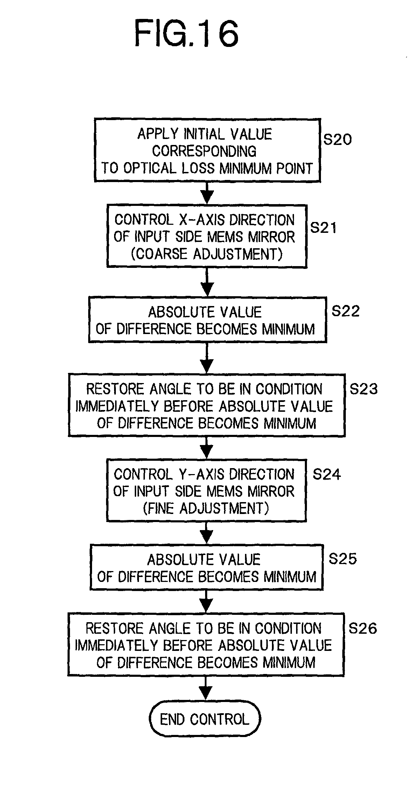

In the case of applying the above described control system where the count value equivalent to the optical loss minimum point is supplied as the initial value, in order to realize the control with higher accuracy, it is effective to control, for example in accordance with the procedures such as shown in a flowchart of FIG. 16. More specifically, at first in step 20, the initial value equivalent to the minimum point of the optical loss in each axis direction of the respective MEMS mirrors is supplied to each of the corresponding U/D counters. Then, in step 21, for example the count value of the U/D counter 21X of the MEMS mirror drive section 14A is increased or decreased, to perform the angle control of the X-axis direction of the input side MEMS mirror. Next, in step 22, if the point where the absolute value of the difference becomes minimum is detected, then in step 23, the angle of the X-axis direction of the input side MEMS mirror is restored to the state immediately before minimized.

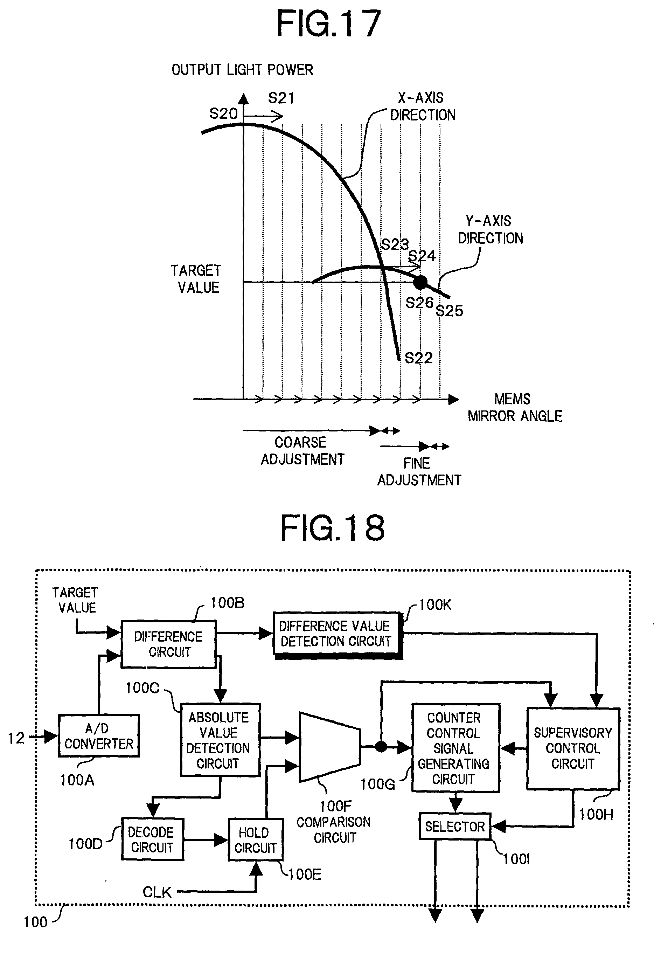

Next in step 24, the count value of the U/D counter 21Y of the MEMS mirror drive section 14A is increased or decreased, to perform the angle control of the Y-axis direction of the input side MEMS mirror. The accuracy of control at this time becomes higher compared to the accuracy of control of the X-axis of the input side MEMS mirror in step 21 through step 23. That is to say, as already shown in (A) of FIG. 3, the power of the light coupled to the output optical fiber is changed for each axis independently in accordance with the Gaussian distribution characteristics centered on the maximum point (optical loss minimum point) with respect to the angle change in the X-axis and Y-axis. Therefore, for example as shown in a conceptual diagram of FIG. 17, although the change in the output light power with respect to the angle change in the vicinity of the optical loss minimum point is small, the change in the output light power with respect to the angle change at a position away from the optical loss minimum point becomes great. Focusing on these change characteristics of the output light power with respect to the angle change, at first the coarse adjustment is performed in the X-axis direction of the input side MEMS mirror. Then the control is switched to the Y-axis direction, to perform the fine adjustment in the vicinity of the optical loss minimum point, thereby enabling the angle control with high accuracy. Next, in step 25, if the point where the maximum value of the difference becomes minimum is detected, then in step 26, the angle of the X-axis direction of the input side MEMS mirror is restored to the state immediately before minimized, and the overall control is terminated. The numbers affixed along the respective curves in FIG. 17 are the numbers corresponding to the respective steps in FIG. 16.

According to the fourth embodiment as described above, by supplying the count value equivalent to the optical loss minimum value as the initial value to perform the angle control of the MEMS mirror, it is possible to achieve the shortening of the control time. Moreover, by switching the controls of the two axis directions to perform the coarse adjustment and the fine adjustment, it becomes possible to achieve the control with even higher accuracy.

In the fourth embodiment, the description has been given assuming that in the case of performing the coarse adjustment and the fine adjustment, the axis direction for the coarse adjustment was one direction. However, a plurality of axis directions may be set for the coarse adjustment. For example, the constitution may be such that the coarse adjustment is performed simultaneously for the X-axis directions of the respective MEMS mirrors on the input side and the output side, and thereafter, the fine adjustment is performed for the Y-axis direction of the MEMS mirror on the input side or the output side. According to such a control system, even when the target value of the optical output level is set to be at a low level, the control time can be effectively shortened.

Further, an application can be adopted where the abovementioned coarse adjustment for a single axis direction and the coarse adjustment for a plurality of axis directions are switched to be performed according to the absolute value of the difference. More specifically, as shown in FIG. 18, in the comparison control section 100, there is provided a difference value detection circuit 100K that detects a difference value of the output light power to the target value calculated in the difference circuit 100B, to judge if the difference value exceeds a previously set threshold value, and the judgment result is transmitted to the supervisory control circuit 100H to control the selector selection signal switching circuit 32. As a result, in the case where the difference value is equal to or less than the threshold value, the coarse adjustment is performed for the single axis direction, while in the case where the difference value exceeds the threshold value, the coarse adjustment is simultaneously performed for the plurality of axis directions. By adopting such a control system, irregularities in the control time which occur according to differences in the desired optical output level that is set as the target value can be suppressed, enabling the constant control of the optical output level to be stably performed.

Next is a description of a control apparatus for an optical signal exchanger according to a fifth embodiment of the present invention.

In the fifth embodiment, a description is given of an application example where a function for judging whether or not the constant control of the optical output level is possible according to the setting of target value of the optical output level, is added to the control apparatus.

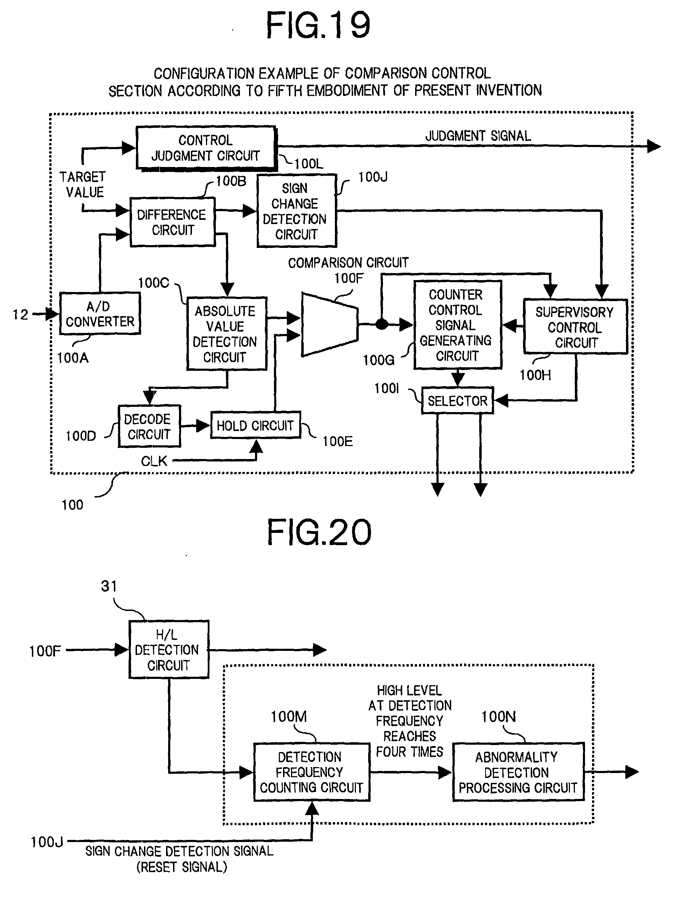

FIG. 19 is a functional block diagram showing a constitution of a comparison control section used in the control apparatus of the fifth embodiment.

In FIG. 19, the control apparatus of this embodiment is constituted such that, for example in the comparison control section 100 of the second embodiment shown in FIG. 8, there is provided a control judgment circuit 100L that judges whether or not the constant control of the optical output level as described in the second embodiment is possible according to the target value supplied to the difference circuit 100B, to output the judgment result to the exterior or the like. Constitution other than the control judgment circuit 100L is the same as that in the second embodiment.

The effective maximum level capable to be set as the target value of the optical output level is a known value (hereunder control upper limit value) uniquely determined by the optical input level and the loss for when the optical loss is adjusted to become minimum. Therefore, in this embodiment, a large/small comparison of the target value supplied to the difference circuit 100B and the control upper limit value is performed by the control judgment circuit 100L, and in the case where the target value is set to exceed the control upper limit value, it is judged that the control is not possible, and a judgment signal indicating the judgment result is output to the exterior. As a result, it becomes possible to transmit beforehand to the exterior a circumstance where in the present optical signal exchanger, the optical output level cannot be constantly controlled to the target value due to the optical input level and the optical loss.

In the fifth embodiment, in the case where the controls of four axis directions are completed without the sign change detection circuit 100J detecting even one sign change, the angle of each MEMS mirror is adjusted to the point where the optical loss becomes minimum without the optical output level reaching the target value. Such a circumstance means that an abnormality or the like has occurred in the optical signal to be input to the optical signal exchanger, and the defined optical input level is not satisfied. Therefore, by adding the function for detecting such a circumstance, it becomes possible to judge an abnormal occurrence in a system connected to a previous stage of the optical signal exchanger.

More specifically, as shown for example in FIG. 20, there is provided a detection frequency counting circuit 100M comprising a counter or the like that counts detection frequencies of change of from high level to low level in the H/L detection circuit 31 constituting the supervisory control circuit 100H, and an abnormality detection processing circuit 100N that detects the occurrence of an abnormality in the system on the previous stage side according to an output signal from the detection frequency counting circuit 100M. With such a constitution, in the detection frequency counting circuit 100M that is reset by the sign change detection signal output from the sign change detection circuit 100J, if the detection frequency of the level change in the H/L detection circuit 31 reaches four times, and a high level signal is output to the abnormality detection processing circuit 100N, the abnormality detection processing circuit 100N judges the occurrence of an abnormality in the system on the previous stage side to output a signal for transmitting the occurrence of an abnormality to the exterior. As a result, it becomes possible to improve the reliability of a communication system to which the present optical signal exchanger is applied.

Next is a description of a control apparatus for an optical signal exchanger according to a sixth embodiment of the present invention.

Since each of the above described respective embodiments is constituted to monitor the output light power to feedback control the angle of each MEMS mirror, then even if the optical input level is change at the time of switching of the channels in this optical signal exchanger, the optical output level can be controlled to be constant by correcting the angle of each MEMS mirror. However, the case is also assumed where the path switching or the like is performed on the system connected to the previous stage of the optical signal exchanger, so that the optical input level to the present optical signal exchanger drops suddenly although in momentary. In such a case, the output light power is monitored in a stage where the optical input level has dropped suddenly, and the constant control of the optical output level is performed. Hence, there is a possibility of an erroneous operation occurring due to outside factors that are not directly related to the operation of the optical signal exchanger. Therefore, in the sixth embodiment, an application example is described where a function for avoiding an erroneous operation due to such outside factors as described above is added to the control apparatus.

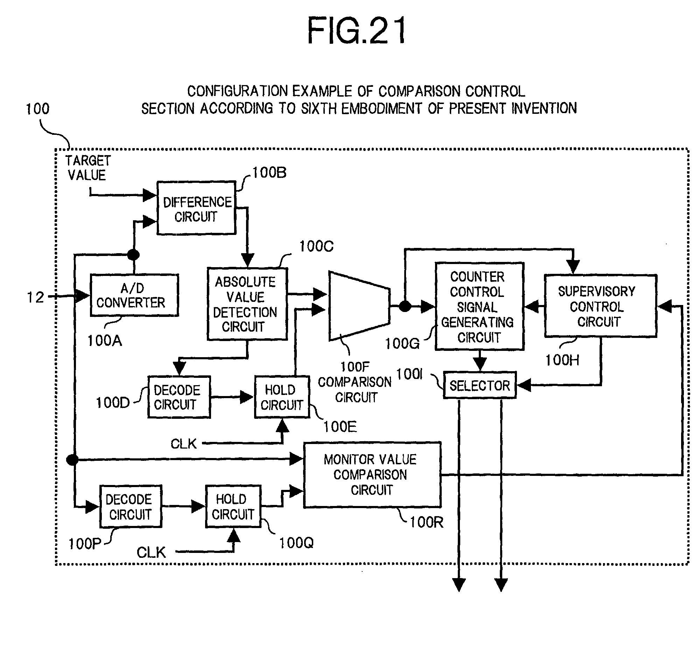

FIG. 21 is a functional block diagram showing a constitution of a comparison control section used in the control apparatus of the sixth embodiment.

In FIG. 21, the control apparatus of this embodiment is constituted such that, for example in the comparison control section 100 of the first embodiment shown in FIG. 1, there is provided a decode circuit 100P, a hold circuit 100Q and a monitor value comparison circuit 100R. The decode circuit 100P decodes the digital signal output from the A/D converter 100A to output to the hold circuit 100Q. The hold circuit 100Q that is input with a clock signal CLK of a required frequency, holds the output signal from the decode circuit 100P is held for a previously set fixed time, to thereafter send the output signal to one of the input terminals of the monitor value comparison circuit 100R. The monitor value comparison circuit 100R is a circuit that performs a large/small comparison between a voltage value represented by the digital signal from the A/D converter 100A to be supplied to the other input terminal, and a voltage value representing the digital signal from the hold circuit 100Q, and transmits the comparison result to the supervisory control circuit 100H.

In the above described constitution, in the case where the optical input level drops suddenly in momentary, the comparison value in the monitor value comparison circuit 100R is also decreased, according to the change in the optical input level. Therefore, the monitor value comparison circuit 100R, when detecting that the comparison value has dropped to the previously set (negative) threshold value or below, transmits a control signal for stopping the controls of the respective MEMS mirrors to the supervisory control circuit 100H. Then, when the sudden drop in the optical input level is recovered and the comparison value of the monitor value comparison circuit 100R exceeds the threshold value, a control signal to resume the stopped controls of the respective MEMS mirrors is transmitted to the supervisory control circuit 100H.

In this manner, according to the sixth embodiment, in the case where the path switching is performed on the system connected to the previous stage of the optical signal exchanger so that the optical input level drops suddenly in momentary, the controls of the respective MEMS mirrors are stopped. Therefore, it becomes possible to avoid the erroneous operation of the optical signal exchanger due to external factors.

## Claims

1. A control apparatus of an optical signal exchanger which optical signal exchanger includes a first mirror array (2A) and a second mirror array (2B), each having a plurality of tilt mirrors arranged on a plane, each tilt mirror having a reflecting surface an angle of which is controllable, and which optical signal exchanger sequentially reflects an input optical signal by said first and second mirror arrays to output from a specific output position, the control apparatus being for controlling the angle of the reflecting surface of each of the tilt mirrors of said first and second mirror arrays and comprising:
an optical power detection unit (12) that detects power of the optical signal output from said specific output position; and
an angle control unit (14A, 14B, 100) that controls the angle of at least one of the reflecting surfaces of the tilt mirrors of said first and second mirror arrays, which have reflected the optical signal;
**characterised in that** the angle control unit controls the angle so that the optical power detected by said optical power detection unit is substantially constant regardless of an optical input level at a previously set target value corresponding to said specific output position.

2. A control apparatus according to claim 1,
wherein said angle control unit includes:
a first mirror drive section (14A) comprising means for changing the angle of the reflecting surface of each tilt mirror of said first mirror array stepwise in a constant control direction;
a second mirror drive section (14B) comprising means for changing the angle of the reflecting surface of each tilt mirror of said second mirror array stepwise in a constant control direction; and
a comparison control section (100) comprising means for calculating absolute values of differences between said target value and respective values of the output light power that are detected by said optical power detection unit immediately before and after the angle of the reflecting surface is changed by at least one of said first mirror drive section and said second mirror drive section to compare the absolute values with each other, and means for determining respective control directions in said first mirror drive section and said second mirror drive section based on said comparison result, to feedback control the angle of the reflecting surface so that the absolute values of said differences become minimum.

3. A control apparatus according to claim 2,
wherein said comparison control section (100) includes:
a difference circuit (100B) that obtains a difference between said target value and a value of the optical power detected by said optical power detection unit;
an absolute value detection circuit (100C) that detects the absolute value of the difference obtained by said difference circuit;
a hold circuit (100E) that holds a signal indicating the absolute value detected by said absolute value detection circuit for a constant time, to then output said signal;
a comparison circuit (100F) that compares an output signal from said absolute value detection circuit and an output signal from said hold circuit, and outputs a signal a level of which is changed according to a large/small relation of the absolute values indicated by the respective output signals;
a control signal generating circuit (100G) that generates a control signal for determining respective control directions in said first mirror drive section and said second mirror drive section, in accordance with the level of the output signal from said comparison circuit; and
a supervisory control (100H) circuit that supervises the output signal from said comparison circuit to control the operation setting of said control signal generating circuit.

4. A control apparatus according to claim 2 or 3,
wherein said comparison control section (100) detects a sign change of a difference between said target value and a value of the output light power detected by said optical power detection unit (12), and switches the tilt mirrors to be angle controlled or axis directions of the reflecting surfaces of said tilt mirrors, based on the comparison result of the absolute value of said difference and the detection result of said sign change.

5. A control apparatus according to claim 2, 3 or 4,
wherein said comparison control section (100) investigates to determine control directions where the value of the output light power detected by said optical power detection unit (12) approximates to said target value, for respective axes of the reflecting surfaces of the respective tilt mirrors of said first and second mirror arrays, in an initial state before feedback controlling the angles of the reflecting surfaces, and wherein:
said comparison control section sequentially switches the feedback control for each axis in accordance with each of said determined control directions.

6. A control apparatus according to claim 5,
wherein said comparison control section (100) performs the feedback control simultaneously for at least two axes of a plurality of axes, in accordance with said determined respective control directions.

7. A control apparatus according to claim 5,
wherein said comparison control section (100) performs the feedback control simultaneously for at least two axes of a plurality of axes, in accordance with said determined respective control directions, and then performs the feedback control for another axis.

8. A control apparatus according to any of claims 2 to 7,
wherein said comparison control section (100) initially sets the angles of the reflecting surfaces so that an optical loss with respect to the optical signal output from said specific position becomes minimum, for respective axes of the reflecting surfaces of the respective tilt mirrors of said first and second mirror arrays, (2A, 2B) in an initial state before feedback controlling the angles of the reflecting surfaces, and then
said comparison control section feedback controls in accordance with an arbitrary control direction with respect to at least one axis of a plurality of axes.

9. A control apparatus according to claim 8,
wherein said comparison control section (100), after said initial setting, performs the feedback control simultaneously in accordance with arbitrary control directions with respect to at least two axes of the plurality of axes.

10. A control apparatus according to claim 8 or 9,
wherein said comparison control section (100), after said initial setting, coarsely adjusts the angle of the reflecting surface in an arbitrary control direction with respect to at least one axis of the plurality of axes, and then finely adjusts the angle of the reflecting surface in an arbitrary control direction with respect to another axis of the plurality of axes, to perform the feedback control.

11. A control apparatus according to claim 10,
wherein the number of axes for coarsely adjusting the angle of said reflecting surface is set according to a value of a difference between said target value and the value of the output light power detected by said optical power detection unit (12).

12. A control apparatus according to any of the preceding claims,
wherein said angle control unit comprises a control judgment section that judges whether or not said target value is set to exceed a range in which said target value is controllable, to output a signal informing that the control is not possible, in accordance with said judgment result.

13. A control apparatus according to claim 4, or any of claims 5 to 12 when appended to claim 4,
wherein said angle control unit comprises an abnormality detection processing section that detects an abnormality of the optical signal input to the optical signal exchanger when the absolute value of the difference for all of the axis directions becomes minimum, without detecting a sign change of said difference.

14. A control apparatus according to any of the preceding claims,
wherein said angle control unit (14A, 14B, 100) stops the control of the angle of said reflecting surface when a change amount in the optical power detected by - said optical power detection unit (12) exceeds a previously set value.

15. A control method of an optical signal exchanger which includes a first mirror array (2A) and a second mirror array (28), each having a plurality of tilt mirrors arranged on a plane, each tilt mirror having a reflecting surface an angle of which is controllable, and which optical signal exchanger sequentially reflects an input optical signal by said first and second mirror arrays to output from a specific output position, the control method being for controlling the angle of the reflecting surface of each of the tilt mirrors of said first and second mirror arrays and comprising the processes of:
detecting power of the optical signal output from said specific output position; and
controlling the angle of at least one of the reflecting surfaces of the tilt mirrors of said first and second mirror arrays, which have reflected the optical signal;
**characterized by** controlling the angle so that the optical power detected is substantially constant regardless of an optical input level at a previously set target value corresponding to said specific output position.

## Patentansprüche

1. Steuervorrichtung eines optischen Signalaustauschers, welcher optische Signalaustauscher ein erstes Spiegelarray (2A) und ein zweites Spiegelarray (2B) enthält, die jeweils eine Vielzahl von Neigungsspiegeln haben, die auf einer Ebene angeordnet sind, wobei jeder Neigungsspiegel eine reflektierende Oberfläche hat, deren Winkel steuerbar ist, und welcher optische Signalaustauscher ein eingegebenes optisches Signal durch die ersten und zweiten Spiegelarrays zur Ausgabe von einer spezifischen Ausgabeposition sequentiell reflektiert, welche Steuervorrichtung zum Steuern des Winkels der reflektierenden Oberfläche von jedem der Neigungsspiegel der ersten und zweiten Spiegelarrays dient und umfaßt:
eine optische Energiedetektionseinheit (12), die die Energie des optischen Signals detektiert, das von der spezifischen Ausgabeposition ausgegeben wird; und
eine Winkelsteuereinheit (14A, 14B, 100), die den Winkel von wenigstens einer der reflektierenden Oberflächen der Neigungsspiegel der ersten und zweiten Spiegelarrays steuert, die das optische Signal reflektiert haben;
**dadurch gekennzeichnet, daß** die Winkelsteuereinheit den Winkel derartig steuert, daß die durch die optische Energiedetektionseinheit detektierte optische Energie ungeachtet eines optischen Eingabepegels bei einem vorher festgelegten Zielwert entsprechend der spezifischen Ausgabeposition im wesentlichen konstant ist.

2. Steuervorrichtung nach Anspruch 1,
bei der die Winkelsteuereinheit enthält:
eine erste Spiegelantriebssektion (14A) mit einem Mittel zum schrittweisen Verändern des Winkels der reflektierenden Oberfläche von jedem Neigungsspiegel des ersten Spiegelarrays in einer konstanten Steuerrichtung;
eine zweite Spiegelantriebssektion (14B) mit einem Mittel zum schrittweisen Verändern des Winkels der reflektierenden Oberfläche von jedem Neigungsspiegel des zweiten Spiegelarrays in einer konstanten Steuerrichtung; und
eine Vergleichssteuersektion (100) mit einem Mittel zum Berechnen von Absolutwerten von Differenzen zwischen dem Zielwert und jeweiligen Werten der durch die optische Energiedetektionseinheit detektierten ausgegebenen Lichtenergie, unmittelbar bevor und nachdem der Winkel der reflektierenden Oberfläche durch wenigstens eine von der ersten Spiegelantriebssektion und der zweiten Spiegelantriebssektion verändert wird, um die Absolutwerte miteinander zu vergleichen, und einem Mittel zum Bestimmen von jeweiligen Steuerrichtungen in der ersten Spiegelantriebssektion und der zweiten Spiegelantriebssektion auf der Basis des Vergleichsresultats zur Rückführungssteuerung des Winkels der reflektierenden Oberfläche, so daß die Absolutwerte der Differenzen minimal werden.

3. Steuervorrichtung nach Anspruch 2,
bei der die Vergleichssteuersektion (100) enthält:
eine Differenzschaltung (100B), die eine Differenz zwischen dem Zielwert und einem Wert der durch die optische Energiedetektionseinheit detektierten optischen Energie erhält;
eine Absolutwertdetektionsschaltung (104C), die den Absolutwert der durch die Differenzschaltung erhaltenen Differenz detektiert;
eine Halteschaltung (100E), die ein Signal, das den durch die Absolutwertdetektionsschaltung detektierten Absolutwert angibt, für eine konstante zeit hält, um dann das signal auszugeben;
eine Vergleichsschaltung (100F), die ein Ausgabesignal von der Absolutwertdetektionsschaltung und ein Ausgabesignal von der Halteschaltung vergleicht und ein Signal ausgibt, dessen Pegel sich gemäß einer Groß/Klein-Beziehung der Absolutwerte, die durch die jeweiligen Ausgabesignale angegeben werden, verändert;
eine Steuersignalerzeugungsschaltung (100G), die ein Steuersignal zum Bestimmen von jeweiligen Steuerrichtungen in der ersten Spiegelantriebssektion und der zweiten Spiegelantriebssektion gemäß dem Pegel des Ausgabesignals von der Vergleichsschaltung erzeugt; und
eine Überwachungssteuerschaltung (100H), die das Ausgabesignal. von der Vergleichsschaltung überwacht, um die Operationseinstellung der Steuersignalerzeugungsschaltung zu steuern.

4. Steuervorrichtung nach Anspruch 2 oder 3,
bei der die Vergleichssteuersektion (100) eine Vorzeichenveränderung einer Differenz zwischen dem Zielwert und einem Wert der durch die optische Energiedetektionseinheit (12) detektierten ausgegebenen Lichtenergie detektiert und die Neigungsspiegel, deren Winkel zu steuern ist, oder Achsenrichtungen der reflektierenden Oberflächen der Neigungsspiegel auf der Basis des Vergleichsresultats des Absolutwertes der Differenz und des Detektionsresultats der Vorzeichenveränderung umschaltet.

5. Steuervorrichtung nach Anspruch 2, 3 oder 4,
bei der die Vergleichssteuersektion (100) untersucht, um Steuerrichtungen zu bestimmen, wo sich der Wert der durch die optische Energiedetektionseinheit (12) detektierten ausgegebenen Lichtenergie dem Zielwert nähert, für jeweilige Achsen der reflektierenden Oberflächen der jeweiligen Neigungsspiegel der ersten und zweiten Spiegelarrays, in einem Anfangszustand vor der Rückführungssteuerung der Winkel der reflektierenden Oberflächen, und bei der:
die Vergleichssteuersektion die Rückführungssteuerung für jede Achse gemäß jeder der bestimmten Steuerrichtungen sequentiell umschaltet.

6. Steuervorrichtung nach Anspruch 5,
bei der die Vergleichssteuersektion (100) die Rückführungssteuerung für wenigstens zwei Achsen von einer Vielzahl von Achsen gemäß den bestimmten jeweiligen Steuerrichtungen gleichzeitig ausführt.

7. Steuervorrichtung nach Anspruch 5,
bei der die Vergleichssteuersektion (100) die Rückführungssteuerung für wenigstens zwei Achsen von einer Vielzahl von Achsen gemäß den bestimmten jeweiligen Steuerrichtungen gleichzeitig ausführt und dann die Rückführungssteuerung für eine andere Achse ausführt.

8. Steuervorrichtung nach irgendeinem der Ansprüche 2 bis 7,
bei der die Vergleichssteuersektion (100) die Winkel der reflektierenden Oberflächen anfangs so festlegt, daß ein optischer Verlust bezüglich des optischen Signals, das von der spezifischen Position ausgegeben wird, minimal wird, für jeweilige Achsen der reflektierenden Oberflächen der jeweiligen Neigungsspiegel der ersten und zweiten Spiegelarrays (2A, 2B), in einem Anfangszustand vor der Rückführungssteuerung der Winkel der reflektierenden Oberflächen, und dann
die Vergleichssteuersektion eine Rückführungssteuerung gemäß einer beliebigen Steuerrichtung bezüglich wenigstens einer Achse von einer Vielzahl von Achsen vornimmt.

9. Steuervorrichtung nach Anspruch 8,
bei der die Vergleichssteuersektion (100), nach der Anfangseinstellung, die Rückführungssteuerung gemäß beliebigen Steuerrichtungen bezüglich wenigstens zweier Achsen von der Vielzahl von Achsen gleichzeitig ausführt.

10. Steuervorrichtung nach Anspruch 8 oder 9,
bei der die Vergleichssteuersektion (100), nach der Anfangseinstellung, den Winkel der reflektierenden Oberfläche in einer beliebigen Steuerrichtung bezüglich wenigstens einer Achse von der Vielzahl von Achsen grob einstellt und dann den Winkel der reflektierenden Oberfläche in einer beliebigen Steuerrichtung bezüglich einer anderen Achse von der Vielzahl von Achsen fein einstellt, um die Rückführungssteuerung auszuführen.

11. Steuervorrichtung nach Anspruch 10,
bei der die Anzahl von Achsen zur Grobeinstellung des Winkels der reflektierenden Oberfläche gemäß einem Wert einer Differenz zwischen dem Zielwert und dem Wert der durch die optische Energiedetektionseinheit (12) detektierten ausgegebenen Lichtenergie festgelegt wird.

12. Steuervorrichtung nach irgendeinem der vorhergehenden Ansprüche,
bei der die Winkelsteuereinheit eine Steuerbeurteilungssektion umfaßt, die beurteilt, ob der Zielwert festgelegt ist oder nicht, um einen Bereich zu überschreiten, in dem der Zielwert steuerbar ist, um ein Signal, das mitteilt, daß die Steuerung nicht möglich ist, gemäß dem Beurteilungssignal auszugeben.

13. Steuervorrichtung nach Anspruch 4 oder irgendeinem der Ansprüche 5 bis 12 in Verbindung mit Anspruch 4,
bei der die Winkelsteuereinheit eine Abnormitätsdetektionsverarbeitungssektion umfaßt, die eine Abnormität des dem optischen Signalaustauscher eingegebenen optischen Signals detektiert, wenn der Absolutwert der Differenz für alle Achsenrichtungen minimal wird, ohne eine Vorzeichenveränderung der Differenz zu detektieren.

14. Steuervorrichtung nach irgendeinem der vorhergehenden Ansprüche,
bei der die Winkelsteuereinheit (14A, 14B, 100) die Steuerung des Winkels der reflektierenden Oberfläche stoppt, wenn ein Veränderungsbetrag der durch die optische Energiedetektionseinheit (12) detektierten optischen Energie einen vorher festgelegten Wert überschreitet.

15. Steuerverfahren eines optischen Signalaustauschers, der ein erstes Spiegelarray (2A) und ein zweites Spiegelarray (2B) enthält, die jeweils eine Vielzahl von Neigungsspiegeln haben, die auf einer Ebene angeordnet sind, wobei jeder Neigungsspiegel eine reflektierende Oberfläche hat, deren Winkel steuerbar ist, und welcher optische Signalaustauscher ein eingegebenes optisches Signal durch die ersten und zweiten Spiegelarrays zur Ausgabe von einer spezifischen Ausgabeposition sequentiell reflektiert, welches Steuerverfahren zum Steuern des Winkels der reflektierenden Oberfläche von jedem der Neigungsspiegel der ersten und zweiten Spiegelarrays dient und die Prozesse umfaßt:
Detektieren der Energie des optischen Signals, das von der spezifischen Ausgabeposition ausgegeben wird; und
Steuern des Winkels von wenigstens einer der reflektierenden Oberflächen der Neigungsspiegel der ersten und zweiten Spiegelarrays, die das optische Signal reflektiert haben;
**gekennzeichnet durch** das derartige Steuern des Winkels, daß die detektierte optische Energie ungeachtet eines optischen Eingabepegels bei einem vorher festgelegten Zielwert entsprechend der spezifischen Ausgabeposition im wesentlichen konstant ist.

## Revendications

1. Appareil de commande d'un échangeur de signal optique, lequel échangeur de signal optique comprend un premier ensemble de miroirs (2A) et un second ensemble de miroirs (2B), chacun ayant une pluralité de miroirs inclinables agencés sur un plan, chaque miroir inclinable ayant une surface réfléchissante dont l'angle peut être commandé, et lequel échangeur de signal optique réfléchit séquentiellement un signal optique d'entrée par lesdits premier et second ensembles de miroirs pour le délivrer à partir d'une position de sortie spécifique, l'appareil de commande servant à commander l'angle de la surface réfléchissante de chacun des miroirs inclinables desdits premier et second ensembles de miroirs et comprenant :
une unité de détection de puissance optique (12) qui détecte la puissance de la sortie du signal optique à partir de ladite position de sortie spécifique ; et
une unité de commande d'angle (14A, 14B, 100) qui commande l'angle d'au moins une des surfaces réfléchissantes des miroirs inclinables desdits premier et second ensembles de miroirs qui ont réfléchi le signal optique ;
**caractérisé en ce que** l'unité de commande d'angle commande l'angle de façon à ce que la puissance optique détectée par ladite unité de détection de puissance optique soit sensiblement constante quel que soit le niveau d'entrée optique à une valeur cible préalablement définie correspondant à ladite position de sortie spécifique.

2. Appareil de commande selon la revendication 1,
dans lequel ladite unité de commande d'angle comprend : '
une première section d'entraînement de miroirs (14A) comprenant des moyens pour modifier l'angle de la surface réfléchissante de chaque miroir inclinable dudit premier ensemble de miroirs de façon progressive dans une direction de commande constante ;
une seconde section d'entraînement de miroirs (14B) comprenant des moyens pour modifier l'angle de la surface réfléchissante de chaque miroir inclinable dudit second ensemble de miroirs de façon progressive dans une direction de commande constante ; et
une section de commande de comparaison (100) comprenant des moyens pour calculer les valeurs absolues des différences entre ladite valeur cible et les valeurs respectives de la puissance lumineuse de sortie qui sont détectées par ladite unité de détection de puissance optique immédiatement avant et après que l'angle de la surface réfléchissante a été modifié par au moins l'une de ladite première section d'entraînement de miroirs et de ladite seconde section d'entraînement de miroirs pour comparer les valeurs absolues entre elles, et des moyens pour déterminer les directions de commande respectives dans ladite première section d'entraînement de miroirs et ladite seconde section d'entraînement de miroirs sur la base dudit résultat de comparaison, pour commander par rétroaction l'angle de la surface réfléchissante de façon à ce que les valeurs absolues desdites différences deviennent minimales.

3. Appareil de commande selon la revendication 2,
dans lequel ladite section de commande de comparaison (100) comprend :
un circuit de différence (100B) qui obtient une différence entre ladite valeur cible et une valeur de la puissance optique détectée par ladite unité de détection de puissance optique ;
un circuit de détection de valeur absolue (100C) qui détecte la valeur absolue de la différence obtenue par ledit circuit de différence ;
un circuit de maintien (100E) qui maintient un signal indiquant la valeur absolue détectée par ledit circuit de détection de valeur absolue pendant un temps constant, pour ensuite délivrer ledit signal ;
un circuit de comparaison (100F) qui compare un signal de sortie dudit circuit de détection de valeur absolue et un signal de sortie dudit circuit de maintien, et délivre un signal dont le niveau est modifié selon une relation grande/petite des valeurs absolues indiquée par les signaux de sortie respectifs ;
un circuit de génération de signal de commande (100G) qui génère un signal de commande pour déterminer les directions de commande respectives dans ladite première section d'entraînement de miroirs et ladite seconde section d'entraînement de miroirs, conformément au niveau du signal de sortie dudit circuit de comparaison ; et
un circuit de commande de surveillance (100H) qui surveille le signal de sortie dudit circuit de comparaison pour commander le réglage de fonctionnement dudit circuit de génération de signal de commande.

4. Appareil de commande selon la revendication 2 ou 3,
dans lequel ladite section de commande de comparaison (100) détecte un changement de signe d'une différence entre ladite valeur cible et une valeur de la puissance lumineuse de sortie détectée par ladite unité de détection de puissance optique (12), et commute les miroirs inclinables pour commander leurs angles ou les directions axiales des surfaces réfléchissantes desdits miroirs inclinables, sur la base du résultat de comparaison de la valeur absolue de ladite différence et du résultat de détection dudit changement de signe.

5. Appareil de commande selon la revendication 2, 3 ou 4,
dans lequel ladite section de commande de comparaison (100) fait une recherche pour déterminer les directions de commande où la valeur de la puissance lumineuse de sortie détectée par ladite unité de détection de puissance optique (12) se rapproche de ladite valeur cible, pour les axes respectifs des surfaces réfléchissantes des miroirs inclinables respectifs desdits premier et second ensembles de miroirs, dans un état initial avant de commander par rétroaction les angles des surfaces réfléchissantes, et dans lequel ;
ladite section de commande de comparaison commute séquentiellement la commande par rétroaction pour chaque axe conformément à chacune desdites directions de commande déterminées.

6. Appareil de commande selon la revendication 5,
dans lequel ladite section de commande de comparaison (100) effectue la commande par rétroaction simultanément pour au moins deux axes d'une pluralité d'axes, conformément auxdites directions de commande respectives déterminées.

7. Appareil de commande selon la revendication 5,
dans lequel ladite section de commande de comparaison (100) effectue la commande par rétroaction simultanément pour au moins deux axes d'une pluralité d'axes, conformément auxdites directions de commande respectives déterminées, puis effectue la commande par rétroaction pour un autre axe.

8. Appareil de commande selon l'une quelconque des revendications 2 à 7,
dans lequel ladite section de commande de comparaison (100) règle initialement les angles des surfaces réfléchissantes de façon à ce qu'une perte optique par rapport à la sortie du signal optique à partir de ladite position spécifique devienne minimale, pour les axes respectifs des surfaces réfléchissantes des miroirs inclinables respectifs desdits premier et second ensembles de miroirs (2A, 2B) dans un état initial avant de commander par rétroaction les angles des surfaces réfléchissantes, puis
ladite section de commande de comparaison effectue une commande par rétroaction conformément à une direction de commande arbitraire par rapport à au moins un axe d'une pluralité d'axes.

9. Appareil de commande selon la revendication 8,
dans lequel ladite section de commande de comparaison (100), après ledit réglage initial, effectue la commande par rétroaction simultanément conformément aux directions de commande arbitraires par rapport à au moins deux axes de la pluralité d'axes.

10. Appareil de commande selon la revendication 8 ou 9,
dans lequel ladite section de commande de comparaison (100), après ledit réglage initial, ajuste grossièrement l'angle de la surface réfléchissante dans une direction de commande arbitraire par rapport à au moins un axe de la pluralité d'axes, puis ajuste avec précision l'angle de la surface réfléchissante dans une direction de commande arbitraire par rapport à un autre axe de la pluralité d'axes, pour effectuer la commande par rétroaction.

11. Appareil selon la revendication 10,
dans lequel le nombre d'axes pour ajuster grossièrement l'angle de ladite surface réfléchissante est défini selon une valeur d'une différence entre ladite valeur cible et la valeur de la puissance lumineuse de sortie détectée par ladite unité de détection de puissance optique (12).

12. Appareil de commande selon l'une quelconque des revendications précédentes,
dans lequel ladite unité de commande d'angle comprend une section de jugement de commande qui juge si ladite valeur cible est définie ou non pour dépasser une gamme dans laquelle ladite valeur cible peut être contrôlée, pour délivrer un signal informant que la commande n'est pas possible, conformément audit résultat de jugement.

13. Appareil de commande selon la revendication 4, ou l'une quelconque des revendications 5 à 12 lorsqu'elles sont annexées à la revendication 4,
dans lequel ladite unité de commande d'angle comprend une section de traitement de détection d'anomalie qui détecte une anomalie du signal optique appliqué à l'entrée de l'échangeur de signal optique lorsque la valeur absolue de la différence pour toutes les directions axiales devient minimale, sans détecter de changement de signe de ladite différence.

14. Appareil de commande selon l'une quelconque des revendications précédentes,
dans lequel ladite unité de commande d'angle (14A, 14B, 100) arrête la commande de l'angle de ladite surface réfléchissante lorsqu'une quantité de changement dans la puissance optique détectée par ladite unité de détection de puissance optique (12) dépasse une valeur préalablement définie.

15. Procédé de commande d'un échangeur de signal optique qui comprend un premier ensemble de miroirs (2A) et un second ensemble de miroirs (28), chacun ayant une pluralité de miroirs inclinables agencés sur un plan, chaque miroir inclinable ayant une surface réfléchissante dont l'angle peut être commandé, et lequel échangeur de signal optique réfléchit séquentiellement un signal optique d'entrée par lesdits premier et second ensembles de miroirs pour le délivrer à partir d'une position de sortie spécifique, le procédé de commande servant à commander l'angle de la surface réfléchissante de chacun des miroirs inclinables desdits premier et second ensembles de miroirs et comprenant les procédés consistant à :
détecter la puissance de la sortie du signal optique à partir de ladite position de sortie spécifique ; et
commander l'angle d'au moins une des surfaces réfléchissantes des miroirs inclinables desdits premier et second ensembles de miroirs qui ont réfléchi le signal optique ;
**caractérisé par** le fait de commander l'angle de façon à ce que la puissance optique détectée soit sensiblement constante quel que soit le niveau d'entrée optique à une valeur cible préalablement définie correspondant à ladite position de sortie spécifique.
